(19) Europäisches Patentamt
European Patent Office
Office européen des brevets

(11) EP 3 655 454 B1

(12) **EUROPÄISCHE PATENTSCHRIFT**

(45) Veröffentlichungstag und Bekanntmachung des Hinweises auf die Patenterteilung:
**07.06.2023 Patentblatt 2023/23**

(21) Anmeldenummer: **18745546.4**

(22) Anmeldetag: **19.07.2018**

(51) Internationale Patentklassifikation (IPC):
***C08J 9/232*** *(2006.01)* ***C08J 9/236*** *(2006.01)*
***B29C 44/34*** *(2006.01)* ***B29K 75/00*** *(2006.01)*
***C08G 18/66*** *(2006.01)* ***C08G 101/00*** *(2006.01)*
***C08J 9/16*** *(2006.01)* ***C08J 9/12*** *(2006.01)*
***C08G 18/32*** *(2006.01)* ***C08G 18/08*** *(2006.01)*
***C08G 18/48*** *(2006.01)* ***C08G 18/42*** *(2006.01)*
***C08G 18/24*** *(2006.01)* ***C08G 18/76*** *(2006.01)*
***C08G 18/73*** *(2006.01)* ***C08G 18/40*** *(2006.01)*
***C08G 18/61*** *(2006.01)*

(52) Gemeinsame Patentklassifikation (CPC):
**C08G 18/6674; B29C 44/3461; C08G 18/0895; C08G 18/242; C08G 18/3237; C08G 18/324; C08G 18/4009; C08G 18/4238; C08G 18/4854; C08G 18/61; C08G 18/6685; C08G 18/73; C08G 18/7671; C08J 9/122; C08J 9/16;** (Forts.)

(86) Internationale Anmeldenummer:
**PCT/EP2018/069622**

(87) Internationale Veröffentlichungsnummer:
**WO 2019/016313 (24.01.2019 Gazette 2019/04)**

(54) **THERMOPLASTISCHES POLYURETHAN**
THERMOPLASTIC POLYURETHANE
POLYURÉTHANE THERMOPLASTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.07.2017 EP 17182344**

(43) Veröffentlichungstag der Anmeldung:
**27.05.2020 Patentblatt 2020/22**

(60) Teilanmeldung:
**21176180.4 / 3 909 996**

(73) Patentinhaber: **BASF SE**
**67056 Ludwigshafen am Rhein (DE)**

(72) Erfinder:
- **JAEHNIGEN, Julia Christa**
**67056 Ludwigshafen (DE)**
- **ROY, Nabarun**
**49448 Lemfoerde (DE)**
- **POESELT, Elmar**
**49448 Lemfoerde (DE)**
- **PETROVIC, Dejan**
**49448 Lemfoerde (DE)**
- **GUTMANN, Peter**
**67056 Ludwigshafen (DE)**
- **KEMPFERT, Dirk**
**49448 Lemfoerde (DE)**

(74) Vertreter: **BASF IP Association**
**BASF SE**
**GBI-C006**
**67056 Ludwigshafen (DE)**

(56) Entgegenhaltungen:
**EP-A1- 0 891 999** **WO-A1-2013/153190**
**DE-A1- 2 817 457** **DE-A1-102015 225 456**
**JP-A- S63 179 916**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



**(Forts. nächste Seite)**

Bemerkungen:

Die Akte enthält technische Angaben, die nach dem Eingang der Anmeldung eingereicht wurden und die nicht in dieser Patentschrift enthalten sind.

(52) Gemeinsame Patentklassifikation (CPC): (Forts.)
**C08J 9/232; C08J 9/236;** B29K 2075/00;
C08G 2101/00; C08G 2350/00; C08G 2410/00;
C08J 2201/03; C08J 2203/06; C08J 2207/00;
C08J 2300/22; C08J 2375/04

## Beschreibung

Die vorliegende Erfindung betrifft ein Polyurethan, insbesondere ein thermoplastisches Polyurethan, erhältlich oder erhalten durch Umsetzung von mindestens den Komponenten (i) bis (iii): (i) eine Polyisocyanatzusammensetzung; (ii) eine Polyolzusammensetzung, umfassend (ii.1) mindestens ein Polyester- oder Polyetherdiol, wobei das Polyester- oder Polyetherdiol ein zahlenmittleres Molekulargewicht im Bereich von 500 bis 3000 g/mol aufweist, (ii.2) mindestens ein Polysiloxan aufweisen zwei endständige Hydroxylgruppen; wobei das mindestens eine Polysiloxan gemäß (ii.2) in einem Anteil im Bereich von 5 bis 20 Gewichts-%, bezogen auf das Gesamtgewicht aller Komponenten (ii.1) und (ii.2) enthalten ist; und (iii) eine Kettenverlängererzusammensetzung.

Die Erfindung betrifft weiterhin ein Verfahren zur Herstellung dieses Polyurethans, dessen Verwendung und einen Artikel umfassend das Polyurethan.

Thermoplastische Polyurethane für verschiedene Anwendungen sind aus dem Stand der Technik grundsätzlich bekannt. Durch die Variation der Einsatzstoffe können unterschiedliche Eigenschaftsprofile erhalten werden.

Die Eigenschaften von Polyurethanen und Siliconelastomeren sind in weiten Bereichen komplementär. Polyurethane zeichnen sich durch ihre hervorragende mechanische Festigkeit, Elastizität und eine sehr gute Haftung, Abriebfestigkeit sowie eine einfache Verarbeitung durch Extrusion aus der Schmelze aus. Siliconelastomere dagegen besitzen eine ausgezeichnete Temperatur, UV-, und Witterungsstabilität. Sie behalten ihre elastischen Eigenschaften bei tieferen Temperaturen bei und neigen deshalb auch nicht zur Versprödung. Daneben besitzen sie spezielle wasserabweisende und antihaftende Oberflächeneigenschaften. Durch die Kombination von Urethan- und Silicon-Polymeren werden Materialien mit guten mechanischen Eigenschaften zugänglich, die sich zugleich durch eine gegenüber den Siliconen stark vereinfachten Verarbeitungsmöglichkeiten auszeichnen, jedoch weiterhin die positiven Eigenschaften der Silicone besitzen. Für Polymerblends werden allerdings nicht in allen Fällen ausreichende Verträglichkeiten erreicht, außerdem unterscheiden sich die Eigenschaften von Polymerblends oftmals deutlich von denen der Ursprungspolymere. Nachteilig ist weiterhin, dass es oftmals zu einem "Ausblühen" oder einer Phasenmigration inkompatibler Siloxane kommt.

Die DE 28 17 457 A1 offenbart thermoplastische Polyurethane (TPU), hergestellt aus Polybutandioladipat und Dimethylolpolydimethylsiloxan (mit 3% OH-Gruppen), sowie Butandiol und Hexandiol als Kettenverlänger, die mit 4,4'-MDI reagieren. Aus dem TPU werden Extrusionsfolien mit gleichmässiger Oberfläche hergestellt.

Abhängig von der Art der Anwendung können die Eigenschaften von Polyurethanen durch die Art der Einsatzstoffe und die eingesetzten Mengenverhältnisse variiert werden. Beispielsweise für die Anwendung als Schlauchmaterial oder für den Einsatz als Kabelummantelung ist der Erhalt der mechanischen Eigenschaften von eingesetzten thermoplastischen Polyurethanen auch bei Vorliegen höherer Temperaturen vorteilhaft. Für körpernahe Anwendungen wie beispielsweise Armbänder oder Schmuckbestandteile aber auch diverse protektive Anwendungen wie Schutzfolien, -hüllen ist oftmals eine besondere Haptik und eine gute Hydrophobizität wünschenswert, sowie verbesserte mechanische Eigenschaften, insbesondere Reißdehnung und Zugfestigkeit.

Eine der vorliegenden Erfindung zugrundeliegende Aufgabe bestand daher darin, Materialien mit verbesserter Haptik, guter Hydrophobizität sowie guten mechanische Eigenschaften, insbesondere Reißdehnung und Zugfestigkeit, bereit zu stellen. Eine weitere der vorliegenden Erfindung zugrundeliegende Aufgabe war es, verbesserte Materialien bereitzustellen, deren mechanische Eigenschaften auch bei erhöhten Temperaturen erhalten bleiben.

Erfindungsgemäß wird dieser Aufgabe gelöst durch ein Polyurethan, insbesondere thermoplastisches Polyurethan, erhältlich oder erhalten durch Umsetzung von mindestens den Komponenten (i) bis (ii):

(i) eine Polyisocyanatzusammensetzung;
(ii) eine Polyolzusammensetzung, umfassend

(ii.1) mindestens ein Polyester- oder Polyetherdiol mit einem zahlenmittleren Molekulargewicht im Bereich von 500 bis 3000 g/mol,
(ii.2) mindestens ein Polysiloxan der allgemeinen Formel I

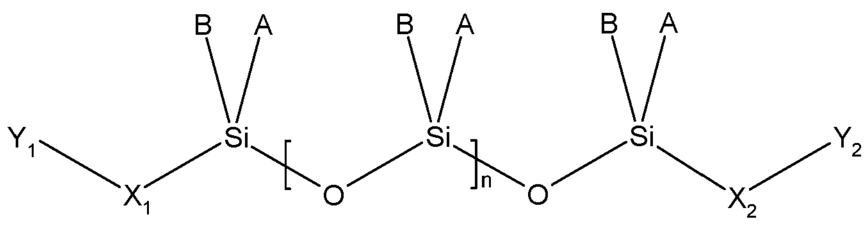
(I),

wobei n eine ganze Zahl im Bereich von 1 bis 250 ist, A und B unabhängig voneinander ausgewählt sind aus

der Gruppe der C1-C20-Alkylgruppen, wobei $X_1$ des Polysiloxans gemäß (ii.2) eine $(CH_2-CH_2-O)_m$-Gruppe oder eine $(CH_2-CH_2-CH_2-O)_m$-Gruppe oder eine $(CH_2-CHCH_3-O)_m$-Gruppe ist, $X_2$ des Polysiloxans gemäß (ii.2) eine $(CH_2-CHCH_3-O)_m$ Gruppe oder eine $(O-CH_2-CH_2)_m$-Gruppe oder eine $(O-CH_2-CH_2-CH_2)_m$-Gruppe ist, wobei m für $X_1$, $X_2$ jeweils unabhängig eine ganze Zahl im Bereich von 2 bis 20 ist; und $Y_1$ und $Y_2$ beide eine Hydroxylgruppe sind;

wobei das mindestens eine Polysiloxan gemäß (ii.2) in einem Anteil im Bereich von 5 bis 20 Gewichts-%, bezogen auf das Gesamtgewicht aller Komponenten (ii.1) und (ii.2), enthalten ist;

(iii) eine Kettenverlängererzusammensetzung.

Hierbei wird das Polysiloxan in die Matrix eingebaut, wodurch negative Effekte wie Ausblühen oder Phasenmigration unterbunden werden. Überraschenderweise weisen die erfindungsgemä-ßen thermoplastischen Polyurethane mit in die Matrix eingebautem Polysiloxan (Si-TPUs) eine verbesserte Haptik auf und eine Hydrophobizität, welche der von reinen Silikonkunststoffen vergleichbar ist. Weiterhin weisen die erfindungsgemäßen Si-TPUs eine verbesserte Stabilität bei thermischer Alterung auf, so werden insbesondere bei weicheren Si-TPUs mit einer Shore-Härte im Bereich von 25A-70A, insbesondere im Bereich von 55 bis 70 A, äußerst überraschend deutlich verbesserte Ergebnisse bei der thermischen Alterung im Kurzzeittest erzielt; gleichfalls ist für weichere TPUs die mechanische Performanz gegenüber den Siloxan-freien TPUs, insbesondere im Hinblick auf Abrieb, Reißdehnung und Zugfestigkeit deutlich verbessert. Für härtere Si-TPUs (Shore-Härte im Bereich von 85A bis 64D, insbesondere im Bereich von 85A bis 95A) ergeben sich überraschenderweise ebenfalls verbesserte Ergebnisse bei der thermischen Alterung, sogar im Langzeittest.

Das Polyurethan, insbesondere das thermoplastische Polyurethan, weist eine Schmelze-Massefließrate (MFR), bestimmt nach DIN EN ISO 1133 (Stand März 2012), im Bereich von 28 bis 350 g/10min, gemessen bei einer Temperatur im Bereich von 190 bis 220°C und einer Masse im Bereich von 1 bis 30 kg, auf. Der MFR ist im Temperaturbereich von 190-200°C messbar, das Material also fließfähig. Bevorzugt weist das Polyurethan, insbesondere das thermoplastische Polyurethan, bei einer Masse im Bereich von 5 bis 35 kg im Temperaturbereich von 190-220°C einen MFR im Bereich von 20 bis 350 g/10min auf. Weiter bevorzugt weist das Polyurethan, insbesondere das thermoplastische Polyurethan, bei einer Masse im Bereich von 10 bis 25 kg im Temperaturbereich von 190-220°C einen MFR im Bereich von 40 bis 330/10min und weiter bevorzugt bei einer Masse im Bereich von 20 bis 25 kg und einer Temperatur von 190°C einen MFR im Bereich von 40 bis 85 g/10min auf.

Das mindestens ein Polysiloxan gemäß (ii.2) weist zwei endständige gegenüber Isocyanaten reaktive Hydroxylgruppen auf, d.h. es weist im Mittel eine Funktionalität zwischen 1,8 und 2,3, bevorzugt zwischen 1,9 und 2,2, insbesondere 2, auf.

In einer bevorzugten Ausführungsform des Polyurethans, insbesondere des thermoplastischen Polyurethans, ist der Index n des mindestens einen Polysiloxans gemäß (ii.2) eine ganze Zahl im Bereich von 3 bis 50 oder im Bereich von 100 bis 240.

Gemäß einer bevorzugten Ausführungsform des Polyurethans, insbesondere des thermoplastischen Polyurethans sind A und B des Polysiloxans gemäß (ii.2) unabhängig voneinander ausgewählt aus der Gruppe der C1- bis C5-Alkylgruppen, bevorzugt sind A und B jeweils gleich und ausgewählt aus der Gruppe der C1- bis C5-Alkylgruppen, wobei weiter bevorzugt A und B beide eine Methylgruppe sind.

In einer bevorzugten Ausführungsform des Polyurethans, insbesondere des thermoplastischen Polyurethans, ist der Index m für $X_1$, $X_2$ des Polysiloxans gemäß (ii.2) jeweils unabhängig eine ganze Zahl im Bereich von 1 bis 15.

In einer besonders bevorzugten Ausführungsform des Polyurethans, insbesondere des thermoplastischen Polyurethans, ist der Index n des mindestens einen Polysiloxans gemäß (ii.2) eine ganze Zahl im Bereich von 3 bis 50, bevorzugt im Bereich von 5 bis 40, weiter bevorzugt im Bereich von 10 bis 20; $X_1$ des Polysiloxans gemäß (ii.2) ist eine $(CH_2-CH_2-O)_m$-Gruppe, $X_2$ des Polysiloxans gemäß (ii.2) ist eine $(O-CH_2-CH_2)_m$-Gruppe, wobei m für $X_1$, $X_2$ jeweils unabhängig eine ganze Zahl im Bereich von 2 bis 20, weiter bevorzugt im Bereich von 3 bis 15, ist; und $Y_1$ und $Y_2$ sind beide eine Hydroxylgruppe.

In einer bevorzugten Ausführungsform weist das Polyurethan, insbesondere das thermoplastische Polyurethan, einen Hartsegmentanteil im Bereich von 10 bis 60 Gewichts-%, bevorzugt im Bereich von 10 bis 50 Gewichts-%, weiter bevorzugt im Bereich 15 bis 40 Gewichts-%, weiter bevorzugt im Bereich von 17 bis 30 Gewichts-%, bezogen auf das Gesamtgewicht aller Komponenten (i), (ii), (ii), auf.

Demgemäß betrifft die vorliegende Erfindung gemäß einer weiteren Ausführungsform ein Polyurethan, insbesondere ein thermoplastisches Polyurethan, wie zuvor beschrieben, welches einen Hartsegmentanteil im Bereich von 10 bis 60 %, bevorzugt im Bereich von 10 bis 50 Gewichts-%, weiter bevorzugt im Bereich von 15 bis 40 %, weiter bevorzugt im Bereich von 17 bis 30 Gewichts-%, bezogen auf das Gesamtgewicht aller Komponenten (i), (ii), (ii), aufweist.

In einer bevorzugten Ausführungsform weist das Polyurethan, insbesondere das thermoplastische Polyurethan, eine Härte im Bereich von Shore 30A bis 98AA oder im Bereich von Shore 40D bis 64D, bevorzugt im Bereich von Shore 30A bis 95A, weiter bevorzugt im Bereich von Shore 70A bis 95A, auf. Shore-Härten im Bereich von 70A bis 95A sind

insbesondere bevorzugt bei der Verwendung für Schaumstoffpartikel.

In einer besonders bevorzugten Ausführungsform des Polyurethans, insbesondere des thermoplastischen Polyurethans, ist das mindestens eine Polysiloxan gemäß (ii.2) in einem Anteil im Bereich von 0,1 bis 60 Gewichts-%, bevorzugt im Bereich von 1 bis 60 Gewichts-%, weiter bevorzugt im Bereich 1 bis 50 Gewichts-%, weiter bevorzugt im Bereich von 1 bis 30 Gewichts-%, weiter bevorzugt im Bereich von 5 bis 45 Gewichts-%, weiter bevorzugt im Bereich von 5 bis 20 Gewichts-%, bezogen auf das Gesamtgewicht aller Komponenten (ii.1) und (ii.2) enthalten und das Polyurethan, insbesondere das thermoplastische Polyurethan, weist einen Hartsegmentanteil im Bereich von 10 bis 50 Gewichts-%, bevorzugt von 15 bis 40 Gewichts-%, weiter bevorzugt im Bereich von 17 bis 30 Gewichts-%,, bezogen auf das Gesamtgewicht aller Komponenten (i), (ii), (ii), auf. Die Erfindung betrifft demgemäß auch ein Polyurethan, insbesondere ein thermoplastisches Polyurethan, wie zuvor beschrieben, in welchem das mindestens eine Polysiloxan gemäß (ii.2) in einem Anteil im Bereich von 0,1 bis 60 Gewichts-%, bevorzugt im Bereich von 0,1 bis 50 Gewichts-%, weiter bevorzugt im Bereich von 1 bis 30 Gewichts-%, weiter bevorzugt im Bereich von 5 bis 45 Gewichts-%, weiter bevorzugt im Bereich von 5 bis 20 Gewichts-%, bezogen auf das Gesamtgewicht aller Komponenten (ii.1) und (ii.2) enthalten ist und welches einen Hartsegmentanteil im Bereich von 10 bis 50 Gewichts-%, bevorzugt im Bereich von 15 bis 40 Gewichts-%, weiter bevorzugt im Bereich von 17 bis 30 Gewichts-%, bezogen auf das Gesamtgewicht aller Komponenten (i), (ii), (ii), aufweist.

Erfindungsgemäß wird gemäß (iii) eine Kettenverlängererzusammensetzung eingesetzt. In einer Ausführungsform des Polyurethans, insbesondere des thermoplastischen Polyurethans, umfasst die Kettenverlängererzusammensetzung gemäß (iii) mindestens eine Verbindung, welche mindestens zwei gegenüber Isocyanaten reaktive funktionelle Gruppen, bevorzugt zwei gegenüber Isocyanaten reaktive funktionelle Gruppen, aufweist, wobei die gegenüber Isocyanaten reaktiven funktionellen Gruppen bevorzugt ausgewählt sind aus der Gruppe von Hydroxylgruppe, Aminogruppe und Thiolgruppe. Erfindungsgemäß wird unter einem Kettenverlängerer eine Verbindung verstanden, die ein Molekulargewicht Mw von kleiner als 300 g/mol aufweist. Dabei ist im Rahmen der vorliegenden Erfindung auch die Polyolzusammensetzung gemäß (ii) frei von derartigen Verbindungen. Erfindungsgemäß können Kettenverlängerer eingesetzt werden, die für die Herstellung von Polyurethanen bekannt sind. Mögliche, niedermolekulare Kettenverlängerer sind beispielsweise in "Kunststoffhandbuch, Band 7, Polyurethane" Carl Hanser Verlag, 3. Auflage, 1993, Kapitel 3.2 und 3.3.2 genannt. In einer bevorzugten Ausführungsform des Polyurethans, insbesondere des thermoplastischen Polyurethans, ist die mindestens eine Verbindung, welche gegenüber Isocyanaten reaktive funktionelle Gruppen aufweist, ausgewählt aus der Gruppe bestehend aus 1,2-Ethandiol, 1,4-Butandiol, 1,6-Hexandiol und 2,4-Diamino-3,5-di(methylthio)toluol, und ist bevorzugt 1,4-Butandiol.

Erfindungsgemäß wird gemäß (ii.1) mindestens ein Polyester- oder Polyetherdiol, d.h. mindestens ein zweiwertiges Polyester- oder Polyetherpolyol, eingesetzt. Diole sind dem Fachmann grundsätzlich bekannt und beispielsweise beschrieben im "Kunststoffhandbuch, Band 7, Polyurethane", Carl Hanser Verlag, 3. Auflage 1993, Kapitel 3.1. Erfindungsgemäß werden Polyesterdiole oder Polyetherdiole eingesetzt. Ebenso könnten Polycarbonate eingesetzt werden. Auch Copolymere könnten im Rahmen der vorliegenden Erfindung eingesetzt werden. Das zahlenmittlere Molekulargewicht $M_n$ der erfindungsgemäß eingesetzten Diole liegt im Bereich von $0{,}5\times10^3$g/mol bis $3\times10^3$ g/mol, bevorzugt zwischen $0{,}8 \times10^3$ g/mol und $3 \times10^3$ g/mol.

Das mindestens eine Polyester- oder Polyetherdiol ist zweiwertig, d.h. es weist eine mittlere Funktionalität zwischen 1,8 und 2,3, bevorzugt zwischen 1,9 und 2,2, insbesondere 2, auf. Bevorzugt weisen die erfindungsgemäß eingesetzten Polyester- oder Polyetherdiole nur primäre Hydroxylgruppen auf.

In einer bevorzugten Ausführungsform des Polyurethans, insbesondere des thermoplastischen Polyurethans, ist das Polyester- oder Polyetherdiol gemäß (ii.1) ausgewählt aus der Gruppe bestehend aus Polyethylenglykol, Polypropylenglykol, Polyadipaten, Polycarbonat(diol)en und Polycaprolactonen und Polytetrahydrofuran (PTHF), bevorzugt aus der Gruppe von Polyesterdiolen und PTHF, wobei das Polyesterdiol bevorzugt aus Adipinsäure, 1,4-Butandiol und 1,6-Hexandiol aufgebaut ist; weiter bevorzugt ist PTHF, wobei das PTHF bevorzugt ein zahlenmittleres Molekulargewicht $M_n$ im Bereich von 500 bis 3000 g/mol, bevorzugt im Bereich von 1000 bis 2000 g/mol, aufweist.

Erfindungsgemäß wird gemäß (i) eine Polyisocyanatzusammensetzung eingesetzt. Die Polyisocyanatzusammensetzung enthält dabei mindestens ein Polyisocyanat. Erfindungsgemäß kann die Polyisocyanatzusammensetzung auch zwei oder mehr Polyisocyanate enthalten. Bevorzugte Polyisocyanate sind im Rahmen der vorliegenden Erfindung Diisocyanate, insbesondere aliphatische oder aromatische Diisocyanate.

Des Weiteren können im Rahmen der vorliegenden Erfindung vorreagierte Prepolymere als Isocyanatkomponenten eingesetzt werden, bei denen ein Teil der OH-Komponenten in einem vorgelagerten Reaktionsschritt mit einem Isocyanat zur Reaktion gebracht werden. Diese Prepolymere werden in einem nachfolgenden Schritt, der eigentlichen Polymerreaktion, mit den restlichen OH-Komponenten zur Reaktion gebracht und bilden dann das thermoplastische Polyurethan. Die Verwendung von Prepolymeren bietet die Möglichkeit, auch OH-Komponenten mit sekundären Alkoholgruppen zu verwenden.

Als aliphatische Diisocyanate werden übliche aliphatische und/oder cycloaliphatische Diisocyanate eingesetzt, beispielsweise Tri-, Tetra-, Penta-, Hexa-, Hepta- und/oder Oktamethylendiisocyanat, 2-Methylpentamethylen-1,5-diisocyanat, 2-Ethyltetramethylen-1,4-diisocyanat, Hexamethylen-1,6-diisocyanat (HDI), Pentamethylen-1,5-diisocyanat, Butylen-1,4-diisocyanat, Trimethylhexamethylen-1,6-diisocyanat, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder 1-Methyl-2,6-cyclohexandiisocyanat, 4,4'-, 2,4'-und/oder 2,2'-Methylendicyclohexyldiisocyanat (H12MDI). Geeignete aromatische Diisocyanate sind insbesondere 1,5-Naphthylendiisocyanat (NDI), 2,4- und/oder 2,6-Toluylendiisocyanat (TDI), 3,3,'-Dimethyl-4,4'-Diisocyanato-Diphenyl (TODI), p-Phenylendiisocyanat (PDI), Diphenylethan-4,4'-diisoyanat (EDI), Diphenylmethandiisocyanat, 3,3'-Dimethyl-diphenyl-diisocyanat, 1,2-Diphenylethandiisocyanat und/oder Diphenylmethandiisocyanate (MDI).

In einer bevorzugten Ausführungsform des Polyurethans, insbesondere des thermoplastischen Polyurethans, enthält die Polyisocyanatzusammensetzung gemäß (i) mindestens ein Polyisocyanat ausgewählt aus den Diisocyanaten, bevorzugt ausgewählt aus der Gruppe bestehend aus 2,2'- Diphenylmethandiisocyanat (2,2'-MDI), 2,4'- Diphenylmethandiisocyanat (2,4'-MDI), 4,4'-Diphenylmethandiisocyanat (4,4'-MDI), Hexamethylen-1,6-diisocyanat (HDI) und 4,4'-, 2,4'-und 2,2'-Methylendicyclohexyldiisocyanat (H12MDI).

Erfindungsgemäß kann die Polyisocyanatzusammensetzung gemäß (i) auch ein oder mehrere Lösungsmittel enthalten. Geeignete Lösungsmittel sind dem Fachmann bekannt. Geeignet sind beispielsweise nicht reaktive Lösungsmittel wie Ethylacetat, Methylethylketon und Kohlenwasserstoffe.

Erfindungsgemäß werden die Komponenten (i) bis (iii) in einem Verhältnis eingesetzt, so dass das molare Verhältnis aus der Summe der Funktionalitäten der eingesetzten Polyolzusammensetzung (ii), insbesondere Polyester- oder Polyetherdiol gemäß (ii.1) und Polysiloxan (ii.2), und Kettenverlängererzusammensetzung (iii) zu der Summe der Funktionalitäten der eingesetzten Polyisocyanatzusammensetzung (i) im Bereich von 1 zu 0,8 bis 1 zu 1,3 liegt. Bevorzugt liegt das Verhältnis im Bereich von 1 zu 0,9 bis 1 zu 1,2, weiter bevorzugt im Bereich von 1 zu 0,965 bis 1 zu 1,05, besonders bevorzugt im Bereich von 1 zu 0,98 bis 1 zu 1,03.

Gemäß einer besonders bevorzugten Ausführungsform betrifft die Erfindung ein Polyurethan, insbesondere ein thermoplastisches Polyurethan, erhältlich oder erhalten durch Umsetzung von mindestens den Komponenten (i) bis (iii):

(i) eine Diisocyanatzusammensetzung, welche mindestens 4,4'-MDI oder HDI umfasst;

(ii) eine Polyolzusammensetzung, umfassend

(ii.1) mindestens ein Polyetherdiol, bevorzugt PTHF, oder ein Polyesterdiol, wobei das Polyetherdiol oder das Polyesterdiol ein zahlenmittleres Molekulargewicht im Bereich von 500 bis 3000 g/mol aufweist,

(ii.2) mindestens ein Polysiloxan der allgemeinen Formel Ia

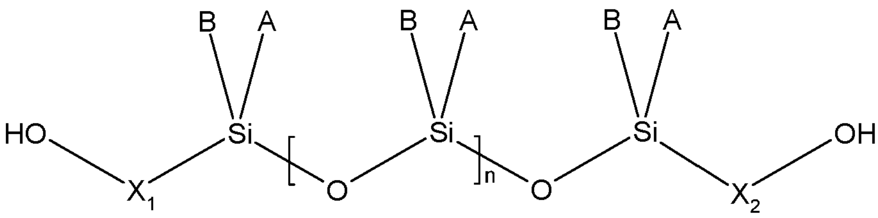

(Ia),

wobei n eine ganze Zahl im Bereich von 10 bis 20 ist, A und B beides Methylgruppen sind; $X_1$ eine $(CH_2\text{-}CH_2\text{-}O\text{-})_m$-Gruppe ist, $X_2$ eine $(O\text{-}CH_2\text{-}CH_2)_m$-Gruppen ist, wobei m für $X_1$, $X_2$ jeweils unabhängig eine ganze Zahl im Bereich von 3 bis 15 ist,

(iii) eine Kettenverlängererzusammensetzung, welche mindestens ein Diol oder Diamin ausgewählt aus der Gruppe bestehend aus 1,4-Butandiol, 1,6-Hexandiol, 1,2-Ethandiol und 2,4-Diamino-3,5-di(methylthio)toluol, umfasst.

Gemäß einer weiteren besonders bevorzugten Ausführungsform betrifft die Erfindung ein Polyurethan, insbesondere ein thermoplastisches Polyurethan, erhältlich oder erhalten durch Umsetzung von mindestens den Komponenten (i) bis (iii):

(i) eine Diisocyanatzusammensetzung, welche mindestens MDI umfasst;

(ii) eine Polyolzusammensetzung, umfassend

(ii.1) mindestens ein Polyetherdiol, bevorzugt PTHF, welches ein zahlenmittleres Molekulargewicht im Bereich von 500 bis 3000 g/mol aufweist,

(ii.2) mindestens ein Polysiloxan der allgemeinen Formel Ia

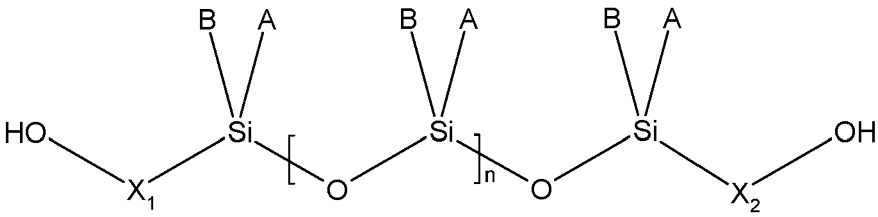

(Ia),

wobei n eine ganze Zahl im Bereich von 10 bis 20 ist, A und B beides Methylgruppen sind; $X_1$ eine $(CH_2\text{-}CH_2\text{-}O\text{-})_m$-Gruppe ist, $X_2$ eine $(O\text{-}CH_2\text{-}CH_2)_m$-Gruppen ist, wobei m für $X_1$, $X_2$ gleich und eine ganze Zahl im Bereich von 3 bis 15 ist;

(iii) eine Kettenverlängererzusammensetzung, welche mindestens 1,6-Hexandiol umfasst.

Bevorzugt weist das Polyurethan, insbesondere das thermoplastische Polyurethan, gemäß dieser Ausführungsform eine Schmelz-Massefließrate bestimmt nach DIN EN ISO 1133 (Stand März 2012) gemessen bei einer Temperatur von 190 °C und 21,6 kg im Bereich von 20 bis 350 g/10min, bevorzugt im Bereich von 35 bis 90 g/10min, weiter bevorzugt im Bereich von 40 bis 85 g/10min, auf.

Gemäß einer weiteren besonders bevorzugten Ausführungsform betrifft die Erfindung ein Polyurethan, insbesondere ein thermoplastisches Polyurethan, erhältlich oder erhalten durch Umsetzung von mindestens den Komponenten (i) bis (iii):

(i) eine Diisocyanatzusammensetzung, welche mindestens HDI umfasst;
(ii) eine Polyolzusammensetzung, umfassend

(ii.1) mindestens ein Polyesterdiol mit einem zahlenmittleren Molekulargewicht im Bereich von 500 bis 3000 g/mol,
(ii.2) mindestens ein Polysiloxan der allgemeinen Formel Ia

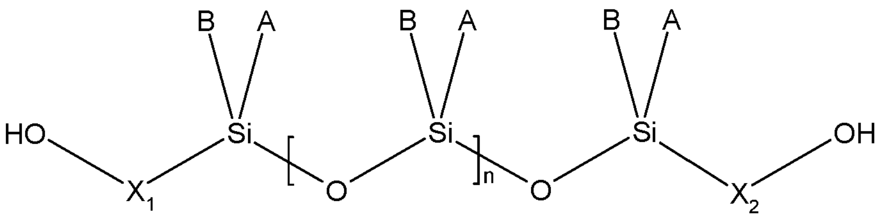

(Ia),

wobei n eine ganze Zahl im Bereich von 10 bis 20 ist, A und B beides Methylgruppen sind; $X_1$ eine $(CH_2\text{-}CH_2\text{-}O\text{-})_m$-Gruppe ist, $X_2$ eine $(O\text{-}CH_2\text{-}CH_2)_m$-Gruppen ist, wobei m für $X_1$, $X_2$ gleich und eine ganze Zahl im Bereich von 3 bis 15 ist;

(iii) eine Kettenverlängererzusammensetzung, welche mindestens 1,6-Hexandiol umfasst.

Bevorzugt weist das Polyurethan, insbesondere das thermoplastische Polyurethan, gemäß dieser Ausführungsform eine Schmelz-Massefließrate bestimmt nach DIN EN ISO 1133 (Stand März 2012) gemessen bei einer Temperatur von 190 °C und 3,8 kg im Bereich von 20 bis 350 g/10min, bevorzugt im Bereich von 28 bis 220 g/10min, weiter bevorzugt im Bereich von 28 bis 215 g/10min, auf.

Gemäß einer weiteren besonders bevorzugten Ausführungsform betrifft die Erfindung ein Polyurethan, insbesondere thermoplastisches Polyurethan, erhältlich oder erhalten durch Umsetzung von mindestens den Komponenten (i) bis (iii):

(i) eine Diisocyanatzusammensetzung, welche mindestens 4,4'-MDI umfasst;
(ii) eine Polyolzusammensetzung, umfassend

(ii.1) mindestens ein Polyesterdiol, welches ein zahlenmittleres Molekulargewicht $M_n$ im Bereich von 500 bis 3000 g/mol aufweist,

(ii.2) mindestens ein Polysiloxan der allgemeinen Formel Ia

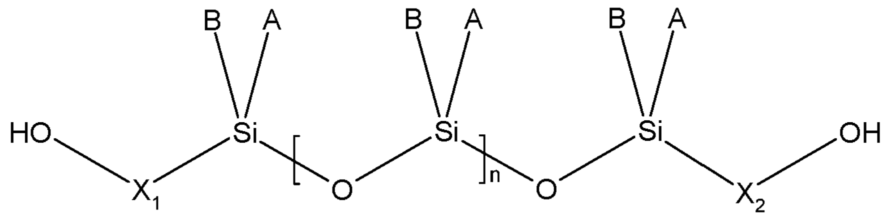

(Ia),

wobei n eine ganze Zahl im Bereich von 10 bis 20 ist, A und B beides Methylgruppen sind; $X_1$ eine $(CH_2-CH_2-O-)_m$-Gruppe ist, $X_2$ eine $(O-CH_2-CH_2)_m$-Gruppen ist, wobei m für $X_1$, $X_2$ gleich und eine ganze Zahl im Bereich von 3 bis 15 ist;

(iii) eine Kettenverlängererzusammensetzung, welche mindestens 1,4-Butandiol umfasst.

Bevorzugt weist das Polyurethan, insbesondere das thermoplastische Polyurethan, gemäß dieser Ausführungsform eine Schmelze-Massefließrate gemessen bei einer Temperatur von 220°C und 2,16 kg im Bereich von 20 bis 350 g/10min, bevorzugt im Bereich von 60 bis 120 g/10min, weiter bevorzugt im Bereich von 65 bis 105 g/10min, auf.

Gemäß einer weiteren besonders bevorzugten Ausführungsform betrifft die Erfindung ein Polyurethan, insbesondere ein thermoplastisches Polyurethan, erhältlich oder erhalten durch Umsetzung von mindestens den Komponenten (i) bis (iii):

(i) eine Diisocyanatzusammensetzung, welche mindestens 4,4'-MDI umfasst;

(ii) eine Polyolzusammensetzung, umfassend

(ii.1) mindestens ein Polyetherdiol, bevorzugt PTHF, welches ein zahlenmittleres Molekulargewicht $M_n$ im Bereich von 500 bis 3000 g/mol aufweist,

(ii.2) mindestens ein Polysiloxan der allgemeinen Formel Ia

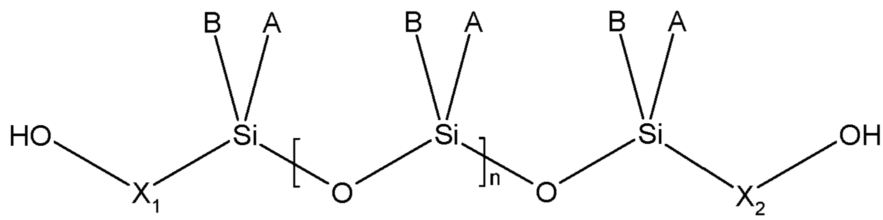

(Ia),

wobei n eine ganze Zahl im Bereich von 10 bis 20 ist, A und B beides Methylgruppen sind; $X_1$ eine $(CH_2-CH_2-O-)_m$-Gruppe ist, $X_2$ eine $(O-CH_2-CH_2)_m$-Gruppen ist, wobei m für $X_1$, $X_2$ gleich und eine ganze Zahl im Bereich von 3 bis 15 ist;

(iii) eine Kettenverlängererzusammensetzung, welche mindestens 1,2-Ethandiol oder 2,4-Dia-mino-3,5-di(methylthio)toluol, bevorzugt 2,4-Diamino-3,5-di(methylthio)toluol, umfasst.

Bevorzugt weist das Polyurethan, insbesondere das thermoplastische Polyurethan, gemäß dieser Ausführungsform eine Schmelze-Massefließrate bestimmt nach DIN EN ISO 1133 (Stand März 2012) gemessen bei einer Temperatur von 190°C und 10 kg im Bereich von 20 bis 350 g/10min, bevorzugt im Bereich von 75 bis 350 g/10min, weiter bevorzugt im Bereich von 85 bis 340 g/10min, auf.

Erfindungsgemäß können bei der Umsetzung der Komponenten (i) bis (iii) weitere Additive zugesetzt werden, beispielsweise Katalysatoren oder Hilfs- und Zusatzstoffe. Zusatzstoffe und Hilfsmittel sind dem Fachmann an sich bekannt. Erfindungsgemäß können auch Kombinationen aus mehreren Additiven eingesetzt werden.

Im Rahmen der vorliegenden Erfindung werden unter dem Begriff "Additiv" insbesondere Katalysatoren, Hilfsstoffe und Zusatzstoffe verstanden, insbesondere Stabilisatoren, Nukleationsmittel, Füllstoffe wie z.B. Silikate oder

Vernetzer wie z.B. mehrfunktionale Alumosilikate.

Gemäß einer weiteren Ausführungsform betrifft die vorliegende Erfindung demgemäß ein Polyurethan, insbesondere ein thermoplastisches Polyurethan, wie zuvor beschrieben, wobei das thermoplastische Polyurethan mindestens ein Additiv enthält.

Als Hilfs- und Zusatzstoffe genannt seien beispielsweise oberflächenaktive Substanzen, Flammschutzmittel, Keimbildungsmittel, Oxidationsstabilisatoren, Antioxidantien, Gleit- und Entformungshilfen, Farbstoffe und Pigmente, Stabilisatoren, z. B. gegen Hydrolyse, Licht, Hitze oder Verfärbung, anorganische und/oder organische Füllstoffe, Verstärkungsmittel und Weichmacher. Geeignete Hilfs- und Zusatzstoffe können beispielsweise dem Kunststoffhandbuch, Band 7, herausgegeben von Vieweg und Höchtlen, Carl Hanser Verlag, München 1966 (S. 103-113) entnommen werden.

Geeignete Katalysatoren sind ebenfalls grundsätzlich aus dem Stand der Technik bekannt. Geeignete Katalysatoren sind beispielsweise organische Metallverbindungen ausgewählt aus der Gruppe bestehend aus Zinn-, Titan-, Zirkonium-, Hafnium-, Bismut-, Zink-, Aluminium- und Eisenorganylen, wie beispielsweise Zinnorganylverbindungen, bevorzugt Zinndialkyle wie Dimethylzinn oder Diethylzinn, oder Zinnorganylverbindungen aliphatischer Carbonsäuren, bevorzugt Zinndiacetat, Zinndilaurat, Dibutylzinndiacetat, Dibutylzinndilaurat, Bismuthverbindungen, wie Bismuthalkylverbindungenoder ähnliche, oder Eisenverbindungen, bevorzugt Eisen-(MI)-acetylacetonat oder die Metallsalze der Carbonsäuren wie z.B. Zinn-II-isooctoat, Zinndioctoat, Titansäureester oder Bismut-(III)-neodecanoat.

Gemäß einer bevorzugten Ausführungsform werden die Katalysatoren ausgewählt aus Zinnverbindungen und Bismuthverbindungen, weiter bevorzugt Zinnalkylverbindungen oder Bismuthalkylverbindungen. Besonders geeignet sind die Zinn-II-isooctoat und Bismuthneodecanoat.

Die Katalysatoren werden üblicherweise in Mengen von 0 bis 2000 ppm, bevorzugt 1 ppm bis 1000 ppm, weiter bevorzugt 2 ppm bis 500 ppm und am meisten bevorzugt von 5 ppm bis 300 ppm eingesetzt.

Geeignete Antioxidantien sind ebenfalls grundsätzlich aus dem Stand der Technik bekannt. In einer Ausführungsform ist das Polyurethan, insbesondere das thermoplastische Polyurethan, erhältlich oder erhalten durch Umsetzung von mindestens den Komponenten (i) bis (ii) und ggf.

(iii) und zusätzlich

(iv) einer Antioxidantzusammensetzung, wobei die Antioxidantzusammensetzung mindestens ein Antioxidant ausgewählt aus den sterisch gehinderten Phenolen, bevorzugt ausgewählt aus den sterisch gehinderten Phenolen, welche mindestens in ortho-Position benachbart zur OH-Gruppe eine tert-Butylgruppe aufweisen, weiter bevorzugt ausgewählt aus der Gruppe bestehend aus Ethylenbis(oxyethylen)bis-(3-(5-tert-butyl-4-hydroxy-m-tolyl)-propionat) (Irganox 245 FF, CAS-Nummer 36443-68-2), Octadecyl-3-(3,5-di-tert-butyl-4-hydroxyphenyl)-propionat (Irganox 1076, CAS-Nummer 2082-79-3), Octyl-3,5-di-tert-butyl-4-hydroxy-hydrocinnamat (Irganox 1135, CAS-Nummer 125643-61-0), N,N'-Hexan-1,6-diyl-bis[3-(3,5-di-tert-butyl-4-hydroxyphenylpropionamid] (Irganox 1098, CAS-Nummer 23128-74-7), Pentaerythritol tetrakis(3-(3,5-di-tert-butyl-4-hydroxyphenyl)propionat) (Irganox 1010, CAS-Nummer 6683-19-8) und 3,5-Bis(tert-butyl)-4-hydroxytoluol (BHT, CAS-Nummer 128-37-0), weiter bevorzugt ausgewählt aus der Gruppe bestehend aus Pentaerythritol tetrakis(3-(3,5-di-tert-butyl-4-hydroxyphenyl)propionat), N,N'-Hexan-1,6-diylbis[3-(3,5-di-tert-butyl-4-hydroxyphenylpropionamid] und einer Mischung aus Pentaerythritol tetrakis(3-(3,5-di-tert-butyl-4-hydroxyphenyl)propionat) und N,N'-Hexan-1,6-diylbis[3-(3,5-di-tert-butyl-4-hydroxyphenylpropionamid].

Gemäß einem weiteren Aspekt betrifft die vorliegende Erfindung auch ein Verfahren zur Herstellung eines Polyurethans, insbesondere eines thermoplastischen Polyurethans, umfassend die Umsetzung der Komponenten (i) bis (iii):

(i) eine Polyisocyanatzusammensetzung;

(ii) eine Polyolzusammensetzung, umfassend

(ii.1) mindestens ein Polyester- oder Polyetherdiol mit einem zahlenmittleren Molekulargewicht im Bereich von 500 bis 3000 g/mol,

(ii.2) mindestens ein Polysiloxan der allgemeinen Formel I

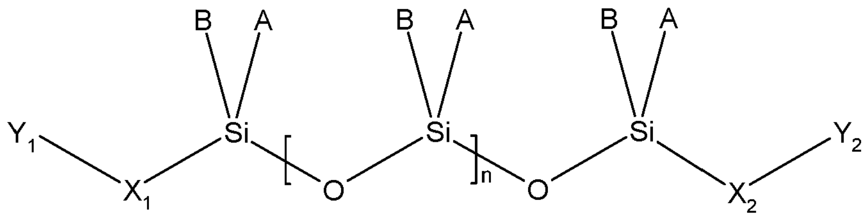

(I),

wobei n eine ganze Zahl im Bereich von 1 bis 250 ist, A und B unabhängig voneinander ausgewählt sind aus der Gruppe der C1-C20-Alkylgruppen, wobei $X_1$ des Polysiloxans gemäß (ii.2) eine $(CH_2-CH_2-O)_m$-Gruppe oder eine $(CH_2-CH_2CH_2-O)_m$-Gruppe oder eine $(CH_2-CHCH_3-O)_m$-Gruppe ist, $X_2$ des Polysiloxans gemäß (ii.2) eine $(O-CHCH_3-CH_2)_m$-Gruppe oder eine $(O-CH_2-CH_2)_m$-Gruppe oder eine $(O-CH_2-CH_2-CH_2)_m$- Gruppe ist, wobei m für $X_1$, $X_2$ jeweils unabhängig eine ganze Zahl im Bereich von 2 bis 20 ist; und $Y_1$ und $Y_2$ beide eine Hydroxylgruppe sind;
wobei das mindestens eine Polysiloxan gemäß (ii.2) in einem Anteil im Bereich von 5 bis 20 Gewichts-%, bezogen auf das Gesamtgewicht aller Komponenten (ii.1) und (ii.2) enthalten ist;

(iii) eine Kettenverlängererzusammensetzung.

Gemäß einer weiteren bevorzugten Ausführungsform betrifft die Erfindung auch ein Verfahren zur Herstellung eines Polyurethans, insbesondere eines thermoplastischen Polyurethans, umfassend die Umsetzung der Komponenten (i) bis (iii):

(i) eine Diisocyanatzusammensetzung, welche mindestens 4,4'-MDI oder HDI umfasst;
(ii) eine Polyolzusammensetzung, umfassend

(ii.1) mindestens ein Polyetherdiol, bevorzugt PTHF, oder ein Polyesterdiol, wobei das Polyether- oder Polyesterdiol ein zahlenmittleres Molekulargewicht im Bereich von 500 bis 3000 g/mol aufweist,
(ii.2) mindestens ein Polysiloxan der allgemeinen Formel Ia

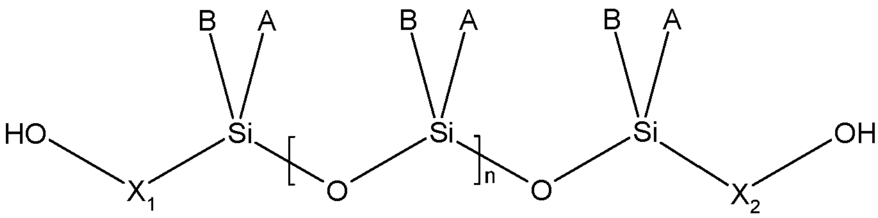

(Ia),

wobei n eine ganze Zahl im Bereich von 10 bis 20 ist, A und B beides Methylgruppen sind; $X_1$ eine $(CH_2-CH_2-O-)_m$-Gruppe ist, $X_2$ eine $(O-CH_2-CH_2)_m$-Gruppen ist, wobei m für $X_1$, $X_2$ jeweils unabhängig eine ganze Zahl im Bereich von 3 bis 15 ist.;

(iii) eine Kettenverlängererzusammensetzung, welche mindestens ein Diol oder Diamin ausgewählt aus der Gruppe bestehend aus 1,4-Butandiol, 1,6-Hexandiol, 1,2-Ethandiol und 2,4-Diamino-3,5-di(methylthio)toluol, umfasst.

Gemäß einer weiteren bevorzugten Ausführungsform betrifft die Erfindung auch ein Verfahren zur Herstellung eines Polyurethans, insbesondere eines thermoplastischen Polyurethans, umfassend die Umsetzung der Komponenten (i) bis (iii):

(i) eine Diisocyanatzusammensetzung, welche mindestens MDI umfasst;
(ii) eine Polyolzusammensetzung, umfassend

(ii.1) mindestens ein Polyetherdiol, bevorzugt PTHF, mit einem zahlenmittleren Molekulargewicht im Bereich von 500 bis 3000 g/mol,
(ii.2) mindestens ein Polysiloxan der allgemeinen Formel Ia

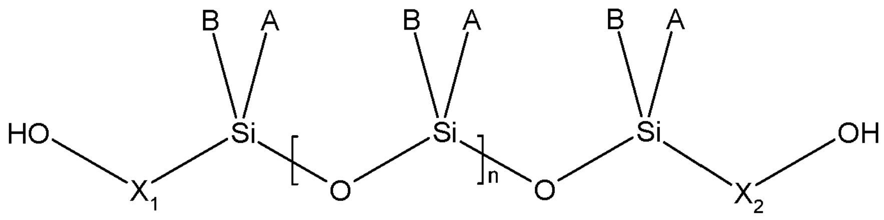

(Ia),

wobei n eine ganze Zahl im Bereich von 10 bis 20 ist, A und B beides Methylgruppen sind; $X_1$ eine $(CH_2-CH_2-O-)_m$-Gruppe ist, $X_2$ eine $(O-CH_2-CH_2)_m$-Gruppen ist, wobei m für $X_1$, $X_2$ gleich und eine ganze Zahl im Bereich von 3 bis 15 ist;

(iii) eine Kettenverlängererzusammensetzung, welche mindestens 1,4-Butandiol umfasst.

Gemäß einer weiteren bevorzugten Ausführungsform betrifft die Erfindung auch ein Verfahren zur Herstellung eines Polyurethans, insbesondere eines thermoplastischen Polyurethans, umfassend die Umsetzung der Komponenten (i) bis (iii):

(i) eine Diisocyanatzusammensetzung, welche mindestens 4,4'-MDI umfasst;
(ii) eine Polyolzusammensetzung, umfassend

(ii.1) mindestens ein Polyetherdiol, bevorzugt PTHF, mit einem zahlenmittleren Molekul argewicht im Bereich von 500 bis 3000 g/mol,
(ii.2) mindestens ein Polysiloxan der allgemeinen Formel Ia

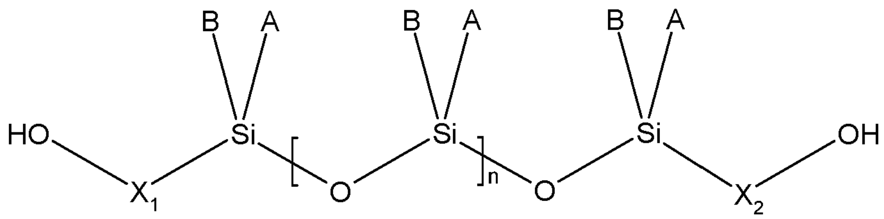

(Ia),

wobei n eine ganze Zahl im Bereich von 10 bis 20 ist, A und B beides Methylgruppen sind; $X_1$ eine $(CH_2-CH_2-O-)_m$-Gruppe ist, $X_2$ eine $(O-CH_2-CH_2)_m$-Gruppen ist, wobei m für $X_1$, $X_2$ gleich und eine ganze Zahl im Bereich von 3 bis 15 ist;

(iii) eine Kettenverlängererzusammensetzung, welche mindestens 1,6-Hexandiol umfasst.

Gemäß einer weiteren bevorzugten Ausführungsform betrifft die Erfindung auch Verfahren zur Herstellung eines Polyurethans, insbesondere eines thermoplastischen Polyurethans, umfassend die Umsetzung der Komponenten (i) bis (iii):

(i) eine Diisocyanatzusammensetzung, welche mindestens 4,4'-MDI umfasst;
(ii) eine Polyolzusammensetzung, umfassend

(ii.1) mindestens ein Polyesterdiol, welches ein zahlenmittleres Molekulargewicht $M_n$ im Bereich von 500 bis 3000 g/mol aufweist,
(ii.2) mindestens ein Polysiloxan der allgemeinen Formel Ia

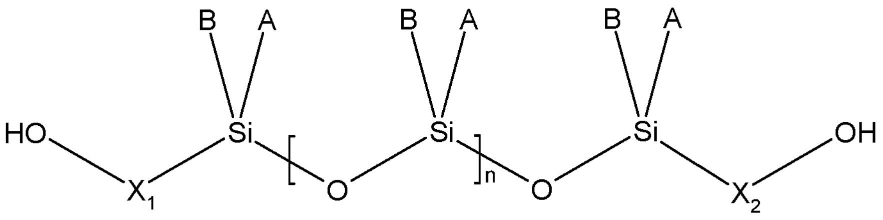

(Ia),

wobei n eine ganze Zahl im Bereich von 10 bis 20 ist, A und B beides Methylgruppen sind; $X_1$ eine $(CH_2-CH_2-O-)_m$-Gruppe ist, $X_2$ eine $(O-CH_2-CH_2)_m$-Gruppen ist, wobei m für $X_1$, $X_2$ gleich und eine ganze Zahl im Bereich von 3 bis 15 ist;

(iii) eine Kettenverlängererzusammensetzung, welche mindestens 1,4-Butandiol umfasst.

Gemäß einer weiteren bevorzugten Ausführungsform betrifft die Erfindung auch ein Verfahren zur Herstellung eines Polyurethans, insbesondere eines thermoplastischen Polyurethans, umfassend die Umsetzung der Komponenten (i) bis (iii):

(i) eine Diisocyanatzusammensetzung, welche mindestens 4,4'-MDI umfasst;
(ii) eine Polyolzusammensetzung, umfassend

(ii.1) mindestens ein Polyetherdiol, bevorzugt PTHF, mit einem zahlenmittleren Molekulargewicht $M_n$ im Bereich von 500 bis 3000 g/mol,
(ii.2) mindestens ein Polysiloxan der allgemeinen Formel Ia

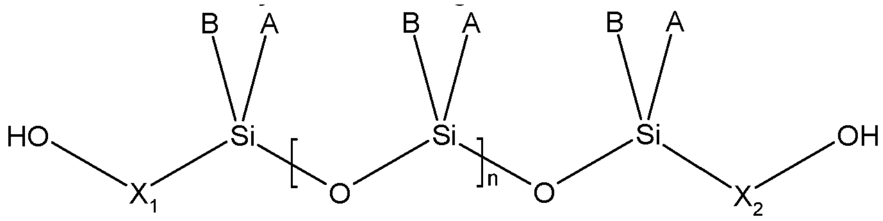

(Ia),

wobei n eine ganze Zahl im Bereich von 10 bis 20 ist, A und B beides Methylgruppen sind; $X_1$ eine $(CH_2-CH_2-O-)_m$-Gruppe ist, $X_2$ eine $(O-CH_2-CH_2)_m$-Gruppen ist, wobei m für $X_1$, $X_2$ gleich und eine ganze Zahl im Bereich von 3 bis 15 ist;

(iii) eine Kettenverlängererzusammensetzung, welche mindestens 1,2-Ethandiol oder 2,4-Diamino-3,5-di(methylthio)toluol, bevorzugt 2,4-Diamino-3,5-di(methylthio)toluol, umfasst.

In einer bevorzugten Ausführungsform des Verfahrens zur Herstellung eines Polyurethans, insbesondere eines thermoplastischen Polyurethans, umfasst es die Umsetzung der Komponenten (i) bis (iii) und zusätzlich (iv) einer Antioxidantzusammensetzung, wobei die Antioxidantzusammensetzung mindestens ein Antioxidant ausgewählt aus den sterisch gehinderten Phenole, bevorzugt ausgewählt aus den sterisch gehinderten Phenolen, welche mindestens in ortho-Position benachbart zur OH-Gruppe eine tert-Butylgruppe aufweisen, weiter bevorzugt ausgewählt aus der Gruppe bestehend aus Ethylenbis(oxyethylen)bis-(3-(5-tert-butyl-4-hydroxy-m-tolyl)-propionat) (Irganox 245 FF, CAS-Nummer 36443-68-2), Octadecyl-3-(3,5-di-tert-butyl-4-hydroxyphenyl)-propionat (Irganox 1076, CAS-Nummer 2082-79-3), Octyl-3,5-di-tert-butyl-4-hydroxy-hydrocinnamat (Irganox 1135, CAS-Nummer 125643-61-0), N,N'-Hexan-1,6-diyl-bis[3-(3,5-di-tert-butyl-4-hydroxyphenylpropionamid] (Irganox 1098, CAS-Nummer 23128-74-7), Pentaerythritol tetrakis(3-(3,5-di-tert-butyl-4-hydroxyphenyl)propionat) (Irganox 1010, CAS-Nummer 6683-19-8) und 3,5-Bis(tert-butyl)-4-hydroxytoluol (BHT, CAS-Nummer 128-37-0), weiter bevorzugt ausgewählt aus der Gruppe bestehend aus Pentaerythritol tetrakis(3-(3,5-di-tert-butyl-4-hydroxyphenyl)propionat), N,N'-Hexan-1,6-diylbis[3-(3,5-di-tert-butyl-4-hydroxyphenylpropionamid] und einer Mischung aus Pentaerythritol tetrakis(3-(3,5-di-tert-butyl-4-hydroxyphenyl)propionat) und N,N'-Hexan-1,6-diylbis[3-(3,5-di-tert-butyl-4-hydroxyphenylpropionamid], enthält.

Bezüglich bevorzugter Ausführungsformen des Verfahrens, geeigneter Einsatzstoffe oder Mischungsverhältnisse wird auf die obigen Ausführungen verwiesen, die entsprechend gelten.

Die Umsetzung der Komponenten (i) bis (iii) kann prinzipiell unter an sich bekannten Reaktionsbedingungen durchgeführt werden. Die Umsetzung kann dabei diskontinuierlich oder auch kontinuierlich erfolgen, beispielsweise in einem Bandverfahren oder einem Reaktionsextrusionsverfahren. Geeignete Verfahren werden beispielsweise beschrieben in EP 0 922 552 A1 oder WO 2006/082183 A1. Gemäß einer bevorzugten Ausführungsform wird die Umsetzung der Komponenten (i) bis (iii) unter erhöhten Temperaturen als Raumtemperatur durchgeführt. Das Erwärmen kann erfindungsgemäß auf jede dem Fachmann bekannte geeignete Art erfolgen. Erfindungsgemäß ist es auch möglich, dass das Verfahren weitere Schritte umfasst, beispielsweise eine Vorbehandlung der Komponenten oder eine Nachbehandlung des erhaltenen Polyurethans, insbesondere des thermoplastischen Polyurethans wie beispielsweise Tempern.

Weiter betrifft die vorliegende Erfindung daher auch die Verwendung eines Polyurethans, insbesondere eines thermoplastischen Polyurethans, wie zuvor beschrieben oder eines Polyurethans, insbesondere eines thermoplastischen Polyurethans erhältlich oder erhalten nach dem erfindungsgemäßen Verfahren zur Herstellung eines Formkörpers, eines Spritzgussprodukts, eines Extrusionsprodukts, oder einer Folie.

Die Eigenschaften der erfindungsgemäßen Polyurethane, insbesondere der thermoplastischen Polyurethane, machen sie geeignet für Anwendungen in diversen Bereichen. Die erfindungsgemäßen thermoplastischen Polyurethane weisen beispielweise eine verbesserte Haptik und eine Hydrophibizität vergleichbar der von reinen Silikonkunststoffen auf, was sie besonders geeignet für die Verwendung in Konsumentenartikel, bevorzugt ausgewählt aus der Gruppe bestehend aus Bekleidungsartikel, insbesondere Schuh und Schuhbestandteil, insbesondere Mittelsohle, Außensohle und Schnürsenkel; Schmuck und Schmuckbestandteil, insbesondere für ein Smartdevice oder Überwachungselektronik (insbesondere zur Überwachung von Körperfunktionen wie Herzschlag, Temperatur), bevorzugt ausgewählt aus der Gruppe bestehend aus Armband, Armbandbestandteil, Umhängeband und Umhängebandbestandteil, Körpergurt und Körpergurtbestandteil, Brille und Brillenbestandteil; Sportzubehörartikel, insbesondere Sportband, Dehnungsband; Dämpfungsmaterial; Schaumstoffpartikel; gewebter Artikel; nicht-gewebter Artikel; Reinigungsartikeln für mobile Fahr- oder Fluggeräte, insbesondere Scheibenwischer; medizinischer Artikel, insbesondere Verbandsartikel oder Schlauch, macht. Ein Smartdevice ist hierbei ein elektronisches Gerät, welches kabellos mit einem anderen Gerät oder Netzwerk vernetzt oder vernetzbar ist, beispielsweise Geräte der Unterhaltungselektronik, Telefon, Smartwatch.

Weiterhin weisen die erfindungsgemäßen Polyurethane, insbesondere die thermoplastischen Polyurethane, gegenüber Standard-TPUs die kein Polysiloxan enthalten und eine vergleichbare Shore A Härte aufweisen, deutlich verbesserte mechanische Eigenschaften, insbesondere eine verbesserte Reißdehnung, Reißfestigkeit und Zugfestigkeit auf, ebenso ist der Abrieb signifikant geringer. Dies macht sie ebenfalls besonders geeignet für Anwendungen bei Konsumentenartikeln wie oben ausgeführt, beispielsweise Armband, aber auch bei Schutzartikeln wie beispielsweise Schutzfolie und Schutzhülle, insbesondere Handyhülle, Designelement für elektrische Bauteile, beispielsweise Laptopcover, Ipad-cover, Lautsprecher, Tragbarer Lautsprecher).

Erfindungsgemäß besonders bevorzugt ist die Verwendung der erfindungsgemäßen Polyurethane, insbesondere die thermoplastischen Polyurethane für Armband, Armbandbestandteil, Umhängeband und Umhängebandbestandteil, Körpergurt und Körpergurtbestandteil, insbesondere für ein Smartdevice oder für Überwachungselektronik. Ebenso besonders bevorzugt ist die Verwendung für Schutzartikel, bevorzugt Schutzhüllen oder Schutzfolien, weiter bevorzugt Handyhülle.

Desweiteren weisen die weisen die erfindungsgemäßen Polyurethane, insbesondere die thermoplastischen Polyurethane, eine deutlich verbesserte Hitzebeständigkeit auf, so werden ihre mechanischen Eigenschaften wie die Reißdehnung selbst bei längerer Anwendung höherer Temperaturen nur wenig beeinträchtigt, was sie besonders geeignet für alle Arten von Wärme ausgesetzten Artikeln, beispielsweise Kabelummantelungen oder Schläuche, wie beispielsweise in Automobilzubehörteilen, insbesondere Automobilkabelummantelungen oder -schläuchen macht. Hier ist es von besonderer Relevanz, dass das Material auch bei längerer Wärmewirkung formstabil bleibt und eine absolute Reißdehnung von mindestens 50% auch nach Wärmeeinwirkung aufweist. Selbst erfindungsgemäße Polyurethane, insbesondere thermoplastischen Polyurethane, welche eine geringere Shore-A-Härte (55A) aufweisen, zeigen in der thermischen Alterung nur eine geringe Verschlechterung der Reißdehnung - normale thermoplastische Polyurethane mit Shore A Härten unterhalb von 80 A schmelzen bei thermischer Alterung innerhalb weniger Minuten.

Weiter betrifft die vorliegende Erfindung daher auch die die Verwendung wie zuvor beschrieben für einen Artikel ausgewählt aus der Gruppe bestehend aus Schuh, Schuhbestandteil, Möbelteil, Kissen, Kisssenbestandteil, Matratze, Matratzenbestandteil, transdermales System, Bestandteil eines transdermalen Systems, insbesondere Pflaster, Bestandteil eines Pflasters, Automobilzubehörteil, insbesondere Automobilkabelummantelung oder -schlauch, Schmuck, Schmuckbestandteil, insbesondere Armband, Folie, insbesondere Fußbodenfolie, Skifolie oder Schutzfolie, und Schutzhülle.

Die Erfindung betrifft weiterhin einen Artikel, umfassend ein Polyurethan, insbesondere ein thermoplastisches Polyurethan, wie zuvor beschrieben oder ein Polyurethan, insbesondere ein thermoplastisches Polyurethan, erhältlich oder erhalten nach einem Verfahren wie zuvor beschrieben.

Die vorliegende Erfindung wird durch die folgenden Ausführungsformen und Kombinationen von Ausführungsformen, die sich aus den entsprechenden Rückbezügen und Verweisen ergeben, näher illustriert. Insbesondere ist dabei

anzumerken, dass in jedem Fall, in dem ein Bereich von Ausführungsformen benannt ist, beispielsweise im Kontext eines Ausdrucks wie "Verfahren konkretisierend eine der Ausführungsformen (1) bis (4)" jede Ausführungsform in diesem Bereich als explizit für den Fachmann offenbart gemeint ist, d.h. die Formulierung dieses Ausdrucks für den Fachmann als synonym zu "Verfahren konkretisierend eine der Ausführungsformen (1), (2), (3) und (4)" zu verstehen ist.

Gemäß einer Ausführungsform (1) betrifft die Erfindung ein Polyurethan, insbesondere thermoplastisches Polyurethan, erhältlich oder erhalten durch Umsetzung von mindestens den Komponenten (i) bis (ii):

(i) eine Polyisocyanatzusammensetzung;
(ii) eine Polyolzusammensetzung, umfassend

(ii.1) mindestens ein Polyester- oder Polyetherdiol mit einem zahlenmittleren Molekulargewicht im Bereich von 500 bis 3000 g/mol,
(ii.2) mindestens ein Polysiloxan der allgemeinen Formel I

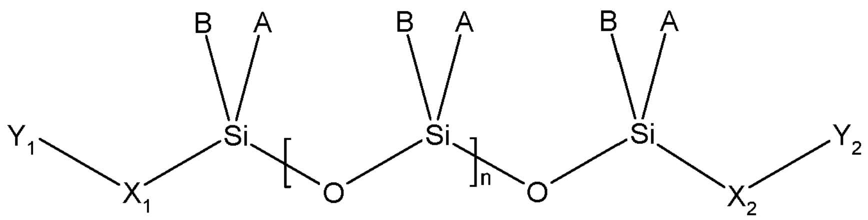

(I),

wobei n eine ganze Zahl im Bereich von 1 bis 250 ist, A und B unabhängig voneinander ausgewählt sind aus der Gruppe der C1-C20-Alkylgruppen, wobei $X_1$ des Polysiloxans gemäß (ii.2) eine $(CH_2\text{-}CH_2\text{-}O)_m$-Gruppe oder eine $(CH_2\text{-}CH_2\text{-}CH_2\text{-}O)_m$-Gruppe oder eine $(CH_2\text{-}CHCH_3\text{-}O)_m$-Gruppe ist, $X_2$ des Polysiloxans gemäß (ii.2) eine $(CH_2\text{-}CHCH_3\text{-}O)_m$ Gruppe oder eine $(O\text{-}CH_2\text{-}CH_2)_m$-Gruppe oder eine $(O\text{-}CH_2\text{-}CH_2\text{-}CH_2)_m$-Gruppe ist, wobei m für $X_1$, $X_2$ jeweils unabhängig eine ganze Zahl im Bereich von 2 bis 20 ist; und $Y_1$ und $Y_2$ beide eine Hydroxylgruppe sind;
wobei das mindestens eine Polysiloxan gemäß (ii.2) in einem Anteil im Bereich von 5 bis 20 Gewichts-%, bezogen auf das Gesamtgewicht aller Komponenten (ii.1) und (ii.2) enthalten ist;

(iii) eine Kettenverlängererzusammensetzung.

Eine bevorzugte Ausführungsform (2), welche Ausführungsform (1) konkretisiert, betrifft das Polyurethan, insbesondere thermoplastische Polyurethan, aufweisend eine Schmelze-Massefließrate bestimmt nach DIN EN ISO 1133 (Stand März 2012) gemessen bei einer Temperatur im Bereich von 190 bis 220°C und bei einer Masse im Bereich von 1 bis 30 kg im Bereich von 20 bis 350 g/10min.

Eine bevorzugte Ausführungsform (3), welche Ausführungsform (1) oder (2) konkretisiert, betrifft das Polyurethan, insbesondere thermoplastische Polyurethan, wobei der Index n des mindestens einen Polysiloxans gemäß (ii.2) eine ganze Zahl im Bereich von 3 bis 50 oder im Bereich von 100 bis 240, ist.

Eine bevorzugte Ausführungsform (4), welche eine der Ausführungsformen (1) bis (3) konkretisiert, betrifft das Polyurethan, insbesondere thermoplastische Polyurethan, wobei A und B des Polysiloxans gemäß (ii.2) unabhängig voneinander ausgewählt sind aus der Gruppe der C1- bis C5-Alkylgruppen, bevorzugt A und B jeweils gleich sind und ausgewählt sind aus der Gruppe der C1- bis C5-Alkylgruppen, wobei weiter bevorzugt A und B beide eine Methylgruppe sind.

Eine bevorzugte Ausführungsform (5), welche eine der Ausführungsformen (1) bis (4) konkretisiert, betrifft das Polyurethan, insbesondere thermoplastische Polyurethan, wobei der Index m für $X_1$, $X_2$ des Polysiloxans gemäß (ii.2) jeweils unabhängig eine ganze Zahl im Bereich von 1 bis 50, bevorzugt im Bereich von 1 bis 20, weiter bevorzugt im Bereich von 1 bis 15, ist.

Eine bevorzugte Ausführungsform (6), welche eine der Ausführungsformen (1) bis (5) konkretisiert, betrifft das Polyurethan, insbesondere thermoplastische Polyurethan, wobei der Index n des mindestens einen Polysiloxans gemäß (ii.2) eine ganze Zahl im Bereich von 3 bis 50, bevorzugt im Bereich von 5 bis 40, weiter bevorzugt im Bereich von 10 bis 20, ist; $X_1$ des Polysiloxans gemäß (ii.2) eine $(CH_2\text{-}CH_2\text{-}O)_m$-Gruppe ist, $X_2$ des Polysiloxans gemäß (ii.2) eine $(O\text{-}CH_2\text{-}CH_2)_m$-Gruppe ist, wobei m für $X_1$, $X_2$ jeweils unabhängig eine ganze Zahl im Bereich von 2 bis 20, weiter bevorzugt im Bereich von 3 bis 15, ist; und $Y_1$ und $Y_2$ beide eine Hydroxylgruppe sind.

Eine bevorzugte Ausführungsform (7), welche eine der Ausführungsformen (1) bis (6) konkretisiert, betrifft das Polyurethan, insbesondere thermoplastische Polyurethan, wobei die Kettenverlängererzusammensetzung gemäß (iii)

mindestens eine Verbindung umfasst, welche mindestens zwei gegenüber Isocyanaten reaktive funktionelle Gruppen, bevorzugt zwei gegenüber Isocyanaten reaktive funktionelle Gruppen, aufweist, wobei die gegenüber Isocyanaten reaktiven funktionellen Gruppen bevorzugt ausgewählt sind aus der Gruppe von Hydroxylgruppe, Aminogruppe und Thiolgruppe.

Eine bevorzugte Ausführungsform (8), welche Ausführungsform (7) konkretisiert, betrifft das Polyurethan, insbesondere thermoplastische Polyurethan, wobei die mindestens eine Verbindung, welche gegenüber Isocyanaten reaktive funktionelle Gruppen aufweist, ausgewählt ist aus der Gruppe bestehend aus 1,2-Ethandiol, 1,4-Butandiol, 1,6-Hexandiol und 2,4-Diamino-3,5-di(methylthio)toluol, und bevorzugt 1,4-Butandiol ist.

Eine bevorzugte Ausführungsform (9), welche eine der Ausführungsformen (1) bis (8) konkretisiert, betrifft das Polyurethan, insbesondere thermoplastische Polyurethan, wobei das Polyester- oder Polyetherdiol gemäß (ii.1) ausgewählt ist aus der Gruppe der zweiwertigen Polyesterdiole und Polyetherdiole, bevorzugt aus der Gruppe bestehend aus Polyethylenglykol, Polypropylenglykol, Polyadipaten, Polycarbonat(diol)en und Polycaprolactonen und Polytetrahydrofuran (PTHF), bevorzugt aus der Gruppe von Polyesterdiolen und PTHF, wobei das Polyesterdiol bevorzugt aus Adipinsäure, 1,4-Butandiol und 1,6-Hexandiol aufgebaut ist; weiter bevorzugt PTHF, wobei das PTHF bevorzugt ein zahlenmittleres Molekulargewicht Mn im Bereich von 500 bis 3000 g/mol, bevorzugt im Bereich von 1000 bis 2000 g/mol, aufweist.

Eine bevorzugte Ausführungsform (10), welche eine der Ausführungsformen (1) bis (9) konkretisiert, betrifft das Polyurethan, insbesondere thermoplastische Polyurethan, wobei die Polyisocyanatzusammensetzung gemäß (i) mindestens ein Polyisocyanat ausgewählt aus den Diisocyanaten, bevorzugt ausgewählt aus der Gruppe bestehend aus 2,2'- Diphenylmethandiisocyanat (2,2'-MDI), 2,4'- Diphenylmethandiisocyanat (2,4'-MDI), 4,4'-Diphenylmethandiisocyanat (4,4'-MDI), Hexamethylen-1,6-diisocyanat (HDI) und 4,4'-, 2,4'- und 2,2'-Methylendicyclohexyldiisocyanat (H12MDI) enthält.

Eine bevorzugte Ausführungsform (11), welche eine der Ausführungsformen (1) bis (10) konkretisiert, betrifft das Polyurethan, insbesondere thermoplastische Polyurethan, wobei das Polyurethan einen Hartsegmentanteil im Bereich von 10 bis 50 Gewichts-%, bevorzugt von 17 bis 30 Gewichts-%, bezogen auf das Gesamtgewicht aller Komponenten (i), (ii), (iii), aufweist.

Eine bevorzugte Ausführungsform (12), welche eine der Ausführungsformen (1) bis (11) konkretisiert, betrifft das Polyurethan, insbesondere thermoplastische Polyurethan, wobei das Polyurethan eine Härte im Bereich von Shore 30AA bis 98A oder im Bereich von Shore 40D bis 64D, bevorzugt im Bereich von Shore 30A bis 95A, weiter bevorzugt im Bereich von Shore 70A bis 95A, aufweist.

Eine bevorzugte Ausführungsform (13), welche eine der Ausführungsformen (1) bis (14) konkretisiert, betrifft das Polyurethan, insbesondere thermoplastische Polyurethan, erhältlich oder erhalten durch Umsetzung von mindestens den Komponenten (i) bis (iii):

(i) eine Diisocyanatzusammensetzung, welche mindestens 4,4'-MDI oder HDI umfasst;
(ii) eine Polyolzusammensetzung, umfassend

(ii.1) mindestens ein Polyetherdiol, bevorzugt PTHF, oder ein Polyesterdiol, wobei das Polyether- oder Polyesterdiol ein zahlenmittleres Molekulargewicht $M_n$ im Bereich von 500 bis 3000 g/mol aufweist,
(ii.2) mindestens ein Polysiloxan der allgemeinen Formel Ia

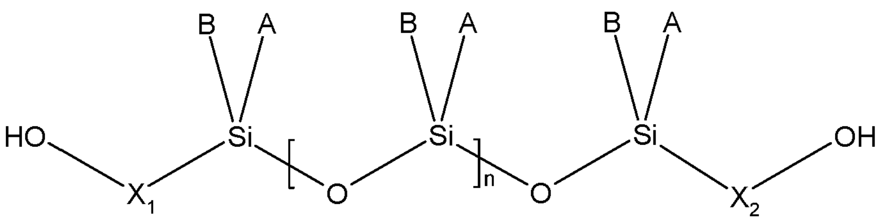

(Ia),

wobei n eine ganze Zahl im Bereich von 10 bis 20 ist, A und B beides Methylgruppen sind; $X_1$ eine $(CH_2-CH_2-O-)_m$-Gruppe ist, $X_2$ eine $(O-CH_2-CH_2)_m$-Gruppen ist, wobei m für $X_1$, $X_2$ jeweils unabhängig eine ganze Zahl im Bereich von 3 bis 15 ist;

(iii) eine Kettenverlängererzusammensetzung, welche mindestens ein Diol oder Diamin ausgewählt aus der Gruppe bestehend aus 1,4-Butandiol, 1,6-Hexandiol, 1,2-Ethandiol und 2,4-Diamino-3,5-di(methylthio)toluol, umfasst.

Eine bevorzugte Ausführungsform (14), welche eine der Ausführungsformen (1) bis (13) konkretisiert, betrifft

das Polyurethan, insbesondere thermoplastische Polyurethan, erhältlich oder erhalten durch Umsetzung von mindestens den Komponenten (i) bis (iii):

(i) eine Diisocyanatzusammensetzung, welche mindestens MDI umfasst;
(ii) eine Polyolzusammensetzung, umfassend

(ii.1) mindestens ein Polyetherdiol, bevorzugt PTHF, welches ein zahlenmittleres Molekulargewicht $M_n$ im Bereich von 500 bis 3000 g/mol aufweist,
(ii.2) mindestens ein Polysiloxan der allgemeinen Formel la

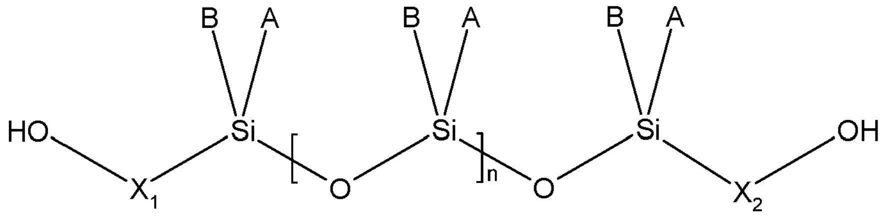
(Ia),

wobei n eine ganze Zahl im Bereich von 10 bis 20 ist, A und B beides Methylgruppen sind; $X_1$ eine $(CH_2-CH_2-O-)_m$-Gruppe ist, $X_2$ eine $(O-CH_2-CH_2)_m$-Gruppen ist, wobei m für $X_1$, $X_2$ gleich und eine ganze Zahl im Bereich von 3 bis 15 ist;

(iii) eine Kettenverlängererzusammensetzung, welche mindestens 1,4-Butanidolumfasst.

Eine bevorzugte Ausführungsform (15), welche eine der Ausführungsformen (1) bis (14) konkretisiert, betrifft das Polyurethan, insbesondere thermoplastische Polyurethan, aufweisend eine Schmelze-Massefließrate bestimmt nach DIN EN ISO 1133 (Stand März 2012) gemessen bei einer Temperatur von 190°C und 21,6 kg im Bereich von 20 bis 350 g/10min, bevorzugt im Bereich von 35 bis 90 g/10min, weiter bevorzugt im Bereich von 40 bis 85 g/10min.

Eine bevorzugte Ausführungsform (16), welche eine der Ausführungsformen (1) bis (15) konkretisiert, betrifft das Polyurethan, insbesondere thermoplastische Polyurethan, erhältlich oder erhalten durch Umsetzung von mindestens den Komponenten (i) bis (iii):

(i) eine Diisocyanatzusammensetzung, welche mindestens HDI umfasst;
(ii) eine Polyolzusammensetzung, umfassend

(ii.1) mindestens ein Polyetherdiol, welches ein zahlenmittleres Molekulargewicht $M_n$ im Bereich von 500 bis 3000 g/mol aufweist,
(ii.2) mindestens ein Polysiloxan der allgemeinen Formel la

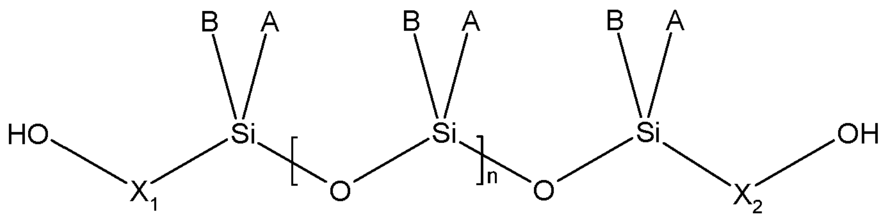
(Ia),

wobei n eine ganze Zahl im Bereich von 10 bis 20 ist, A und B beides Methylgruppen sind; $X_1$ eine $(CH_2-CH_2-O-)_m$-Gruppe ist, $X_2$ eine $(O-CH_2-CH_2)_m$-Gruppen ist, wobei m für $X_1$, $X_2$ gleich und eine ganze Zahl im Bereich von 3 bis 15 ist;

(iii) eine Kettenverlängererzusammensetzung, welche mindestens 1,6-Hexandiol umfasst.

Eine bevorzugte Ausführungsform (17), welche Ausführungsform (16) konkretisiert, betrifft das Polyurethan, insbesondere thermoplastische Polyurethan aufweisend eine Schmelze-Massefließrate bestimmt nach DIN EN ISO 1133 (Stand März 2012) gemessen bei einer Temperatur von 190°C und 3,8 kg im Bereich von 20 bis 350 g/10min,

bevorzugt im Bereich von 28 bis 220 g/10min, weiter bevorzugt im Bereich von 28 bis 215 g/10min.

Eine bevorzugte Ausführungsform (18), welche eine der Ausführungsformen (1) bis (17) konkretisiert, betrifft das Polyurethan, insbesondere thermoplastische Polyurethan2, erhältlich oder erhalten durch Umsetzung von mindestens den Komponenten (i) bis (iii):

(i) eine Diisocyanatzusammensetzung, welche mindestens 4,4'-MDI umfasst;
(ii) eine Polyolzusammensetzung, umfassend

(ii.1) mindestens ein Polyesterdiol, welches ein zahlenmittleres Molekulargewicht $M_n$ im Bereich von 500 bis 3000 g/mol aufweist,
(ii.2) mindestens ein Polysiloxan der allgemeinen Formel Ia

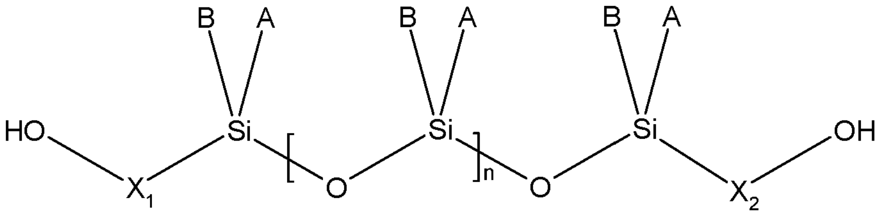
(Ia),

wobei n eine ganze Zahl im Bereich von 10 bis 20 ist, A und B beides Methylgruppen sind; $X_1$ eine $(CH_2-CH_2-O-)_m$-Gruppe ist, $X_2$ eine $(O-CH_2-CH_2)_m$-Gruppen ist, wobei m für $X_1$, $X_2$ gleich und eine ganze Zahl im Bereich von 3 bis 15 ist;

(iii) eine Kettenverlängererzusammensetzung, welche mindestens 1,4-Butandiol umfasst.

Eine bevorzugte Ausführungsform (19), welche eine der Ausführungsformen (1) bis (18) konkretisiert, betrifft das Polyurethan, insbesondere thermoplastische Polyurethan, aufweisend eine Schmelze-Massefließrate bestimmt nach DIN EN ISO 1133 (Stand März 2012) gemessen bei einer Temperatur von 220°C und 2,16 kg im Bereich von 20 bis 350 g/10min, bevorzugt im Bereich von 60 bis 120 g/10min, weiter bevorzugt im Bereich von 65 bis 105 g/10min.

Eine bevorzugte Ausführungsform (20), welche eine der Ausführungsformen (1) bis (19) konkretisiert, betrifft das Polyurethan, insbesondere thermoplastisches Polyurethan, erhältlich oder erhalten durch Umsetzung von mindestens den Komponenten (i) bis (iii):

(i) eine Diisocyanatzusammensetzung, welche mindestens 4,4'-MDI umfasst;
(ii) eine Polyolzusammensetzung, umfassend

(ii.1) mindestens ein Polyetherdiol, bevorzugt PTHF, welches ein zahlenmittleres Molekulargewicht $M_n$ im Bereich von 500 bis 3000 g/mol aufweist,
(ii.2) mindestens ein Polysiloxan der allgemeinen Formel Ia

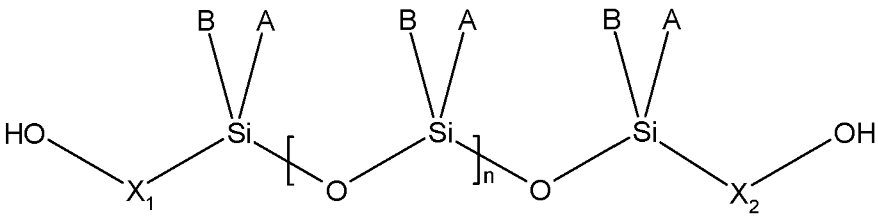
(Ia),

wobei n eine ganze Zahl im Bereich von 10 bis 20 ist, A und B beides Methylgruppen sind; $X_1$ eine $(CH_2-CH_2-O-)_m$-Gruppe ist, $X_2$ eine $(O-CH_2-CH_2)_m$-Gruppen ist, wobei m für $X_1$, $X_2$ gleich und eine ganze Zahl im Bereich von 3 bis 15 ist;;

(iii) eine Kettenverlängererzusammensetzung, welche mindestens 1,2-Ethandiol oder 2,4-Diamino-3,5-di(methylthio)toluol, bevorzugt 2,4-Diamino-3,5-di(methylthio)toluol, umfasst.

Eine bevorzugte Ausführungsform (21), welche eine der Ausführungsformen (1) bis (20) konkretisiert, betrifft das Polyurethan, insbesondere thermoplastische Polyurethan, aufweisend eine Schmelze-Massefließrate bestimmt nach DIN EN ISO 1133 (Stand März 2012) gemessen bei einer Temperatur von 190°C und 10 kg im Bereich von 20 bis 350 g/10min, bevorzugt im Bereich von 75 bis 350 g/10min, weiter bevorzugt im Bereich von 85 bis 340 g/10min.

Eine bevorzugte Ausführungsform (22), welche eine der Ausführungsformen (1) bis (21) konkretisiert, betrifft das Polyurethan, insbesondere thermoplastische Polyurethan, erhältlich oder erhalten durch Umsetzung von mindestens den Komponenten (i) bis (iii) und zusätzlich

(iv) einer Antioxidantzusammensetzung, wobei die Antioxidantzusammensetzung mindestens ein Antioxidant ausgewählt aus den sterisch gehinderten Phenole, bevorzugt ausgewählt aus den sterisch gehinderten Phenolen, welche mindestens in ortho-Position benachbart zur OH-Gruppe eine tert-Butylgruppe aufweisen, weiter bevorzugt ausgewählt aus der Gruppe bestehend aus Ethylenbis(oxyethylen)bis-(3-(5-tert-butyl-4-hydroxy-m-tolyl)-propionat) (Irganox 245 FF, CAS-Nummer 36443-68-2), Octadecyl-3-(3,5-di-tert-butyl-4-hydroxyphenyl)-propionat (Irganox 1076, CAS-Nummer 2082-79-3), Octyl-3,5-di-tert-butyl-4-hydroxy-hydrocinnamat (Irganox 1135, CAS-Nummer 125643-61-0), N,N'-Hexan-1,6-diyl-bis[3-(3,5-di-tert-butyl-4-hydroxyphenylpropionamid] (Irganox 1098, CAS-Nummer 23128-74-7), Pentaerythritol tetrakis(3-(3,5-di-tert-butyl-4-hydroxyphenyl)propionat) (Irganox 1010, CAS-Nummer 6683-19-8) und 3,5-Bis(tert-butyl)-4-hydroxytoluol (BHT, CAS-Nummer 128-37-0), weiter bevorzugt ausgewählt aus der Gruppe bestehend aus Pentaerythritol tetrakis(3-(3,5-di-tert-butyl-4-hydroxyphenyl)propionat), N,N'-Hexan-1,6-diylbis[3-(3,5-di-tert-butyl-4-hydroxyphenylpropionamid] und einer Mischung aus Pentaerythritol tetrakis(3-(3,5-di-tert-butyl-4-hydroxyphenyl)propionat) und N,N'-Hexan-1,6-diylbis[3-(3,5-di-tert-butyl-4-hydroxyphenylpropionamid], enthält.

Eine Ausführungsform (23) betrifft ein Verfahren zur Herstellung eines Polyurethans, insbesondere eines thermoplastischen Polyurethans, umfassend die Umsetzung der Komponenten (i) bis (ii):

(i) eine Polyisocyanatzusammensetzung;
(ii) eine Polyolzusammensetzung, umfassend

(ii.1) mindestens ein Polyester- oder Polyetherdiol mit einem zahlenmittleren Molekulargewicht im Bereich von 500 bis 3000 g/mol,
(ii.2) mindestens ein Polysiloxan der allgemeinen Formel I

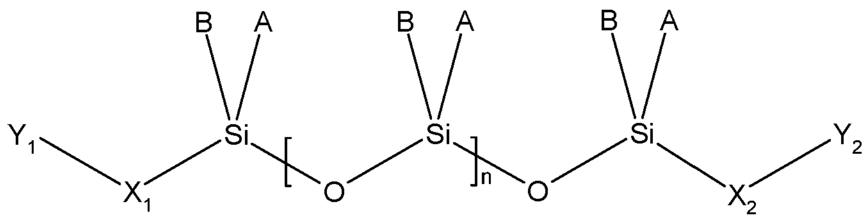

(I),

wobei n eine ganze Zahl im Bereich von 1 bis 250 ist, A und B unabhängig voneinander ausgewählt sind aus der Gruppe der C1-C20-Alkylgruppen, wobei $X_1$ des Polysiloxans gemäß (ii.2) eine $(CH_2\text{-}CH_2\text{-}O)_m$-Gruppe oder eine $(CH_2\text{-}CH_2\text{-}CH_2\text{-}O)_m$-Gruppe oder eine $(CH_2\text{-}CHCH_3\text{-}O)_m$-Gruppe ist, $X_2$ des Polysiloxans gemäß (ii.2) eine $(CH_2\text{-}CHCH_3\text{-}O)_m$ Gruppe oder eine $(O\text{-}CH_2\text{-}CH_2)_m$-Gruppe oder eine $(O\text{-}CH_2\text{-}CH_2\text{-}CH_2)_m$-Gruppe ist, wobei m für $X_1$, $X_2$ jeweils unabhängig eine ganze Zahl im Bereich von 2 bis 20 ist; und $Y_1$ und $Y_2$ beide eine Hydroxylgruppe sind;
wobei das mindestens eine Polysiloxan gemäß (ii.2) in einem Anteil im Bereich von 5 bis 20 Gewichts-%, bezogen auf das Gesamtgewicht aller Komponenten (ii.1) und (ii.2) enthalten ist;

(iii) eine Kettenverlängererzusammensetzung.

Eine bevorzugte Ausführungsform (24), welche Ausführungsform (23) konkretisiert, betrifft das Verfahren zur Herstellung eines Polyurethans, insbesondere eines thermoplastischen Polyurethans, umfassend die Umsetzung der Komponenten (i) bis (iii):

(i) eine Diisocyanatzusammensetzung, welche mindestens 4,4'-MDI oder HDI umfasst;
(ii) eine Polyolzusammensetzung, umfassend

(ii.1) mindestens ein Polyetherdiol, bevorzugt PTHF, oder ein Polyesterdiol, wobei das Polyether- oder Polyesterdiol ein zahlenmittlerens Molekulargewicht im Bereich von 500 bis 3000 g/mol aufweist,

(ii.2) mindestens ein Polysiloxan der allgemeinen Formel Ia

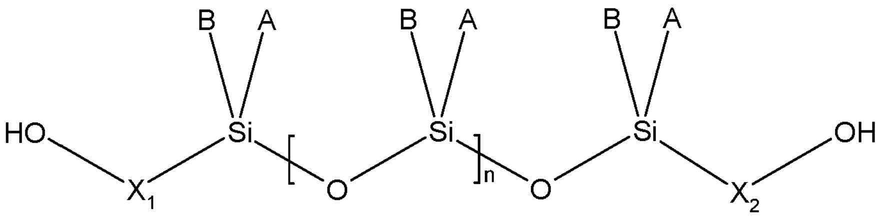

(Ia),

wobei n eine ganze Zahl im Bereich von 10 bis 20 ist, A und B beides Methylgruppen sind; X1 eine (CH2-CH2-O-)m-Gruppe ist, X2 eine (O-CH2-CH2)m-Gruppen ist, wobei m für X1, X2 jeweils unabhängig eine ganze Zahl im Bereich von 3 bis 15 ist;

(iii) eine Kettenverlängererzusammensetzung, welche mindestens ein Diol oder Diamin ausgewählt aus der Gruppe bestehend aus 1,4-Butandiol, 1,6-Hexandiol, 1,2-Ethandiol und 2,4-Diamino-3,5-di(methylthio)toluol, umfasst.

Eine bevorzugte Ausführungsform (25), welche Ausführungsform (23) oder (24) konkretisiert, betrifft das Verfahren zur Herstellung eines Polyurethans, insbesondere eines thermoplastischen Polyurethans, umfassend die Umsetzung der Komponenten (i) bis (iii):

(i) eine Diisocyanatzusammensetzung, welche mindestens MDI umfasst;
(ii) eine Polyolzusammensetzung, umfassend

(ii.1) mindestens ein Polyetherdiol, bevorzugt PTHF, mit einem zahlenmittleren Molekulargewicht im Bereich von 500 bis 3000 g/mol,
(ii.2) mindestens ein Polysiloxan der allgemeinen Formel Ia

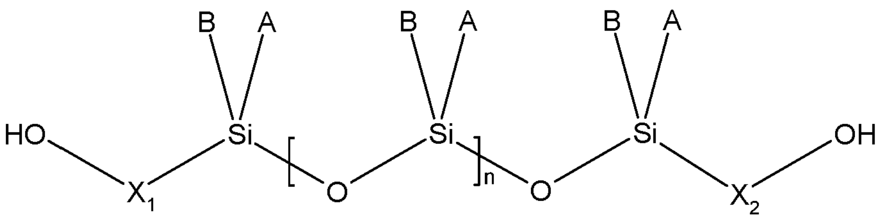

(Ia),

wobei n eine ganze Zahl im Bereich von 10 bis 20 ist, A und B beides Methylgruppen sind; $X_1$ eine $(CH_2\text{-}CH_2\text{-}O\text{-})_m$-Gruppe ist, $X_2$ eine $(O\text{-}CH_2\text{-}CH_2)_m$-Gruppen ist, wobei m für $X_1$, $X_2$ gleich und eine ganze Zahl im Bereich von 3 bis 15 ist;

(iii) eine Kettenverlängererzusammensetzung, welche mindestens 1,4-Butandiol umfasst.

Eine bevorzugte Ausführungsform (26), welche eine der Ausführungsformen (23) bis (25) konkretisiert, betrifft das Verfahren zur Herstellung eines Polyurethans, insbesondere eines thermoplastischen Polyurethans umfassend die Umsetzung der Komponenten (i) bis (ii):

(i) eine Diisocyanatzusammensetzung, welche mindestens HDI umfasst;
(ii) eine Polyolzusammensetzung, umfassend

(ii.1) mindestens ein Polyetherdiol, bevorzugt PTHF, mit einem zahlenmittleren Molekulargewicht im Bereich von 500 bis 3000 g/mol,
(ii.2) mindestens ein Polysiloxan der allgemeinen Formel Ia

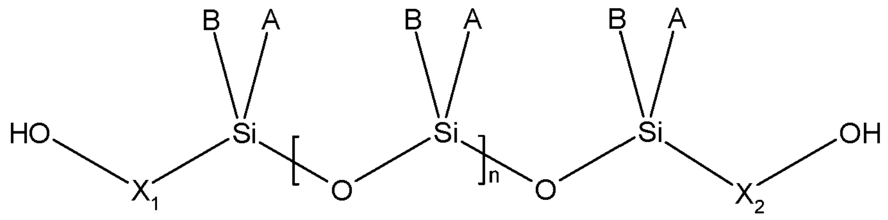

(Ia),

wobei n eine ganze Zahl im Bereich von 10 bis 20 ist, A und B beides Methylgruppen sind; $X_1$ eine $(CH_2\text{-}CH_2\text{-}O\text{-})_m$-Gruppe ist, $X_2$ eine $(O\text{-}CH_2\text{-}CH_2)_m$-Gruppen ist, wobei m für $X_1$, $X_2$ gleich und eine ganze Zahl im Bereich von 3 bis 15 ist;

(iii) eine Kettenverlängererzusammensetzung, welche mindestens1,6-Hexandiol umfasst.

Eine bevorzugte Ausführungsform (27), welche eine der Ausführungsformen (23) bis (26) konkretisiert, betrifft das Verfahren zur Herstellung eines Polyurethans, insbesondere eines thermoplastischen Polyurethans, umfassend die Umsetzung der Komponenten (i) bis (iii):

(i) eine Diisocyanatzusammensetzung, welche mindestens 4,4'-MDI umfasst;
(ii) eine Polyolzusammensetzung, umfassend

(ii.1) mindestens ein Polyesterdiol, welches ein zahlenmittleres Molekulargewicht $M_n$ im Bereich von 500 bis 3000 g/mol aufweist,
(ii.2) mindestens ein Polysiloxan der allgemeinen Formel Ia

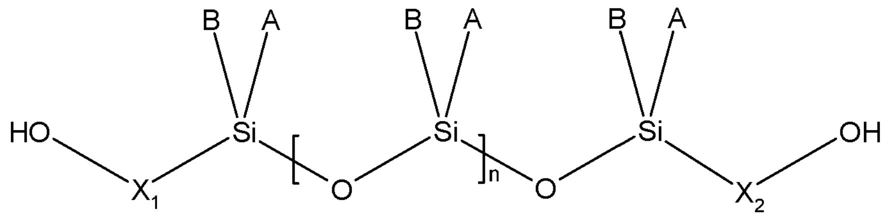

(Ia),

wobei n eine ganze Zahl im Bereich von 10 bis 20 ist, A und B beides Methylgruppen sind; $X_1$ eine $(CH_2\text{-}CH_2\text{-}O\text{-})_m$-Gruppe ist, $X_2$ eine $(O\text{-}CH_2\text{-}CH_2)_m$-Gruppen ist, wobei m für $X_1$, $X_2$ gleich und eine ganze Zahl im Bereich von 3 bis 15 ist;

(iii) eine Kettenverlängererzusammensetzung, welche mindestens 1,4-Butandiol umfasst.

Eine bevorzugte Ausführungsform (28), welche eine der Ausführungsformen (23) bis (27) konkretisiert, betrifft das Verfahren zur Herstellung eines Polyurethans, insbesondere eines thermoplastischen Polyurethans, umfassend die Umsetzung der Komponenten (i) bis (iii):

(i) eine Diisocyanatzusammensetzung, welche mindestens 4,4'-MDI umfasst;
(ii) eine Polyolzusammensetzung, umfassend

(ii.1) mindestens ein Polyetherdiol, bevorzugt PTHF, mit einem zahlenmittleren Molekulargewicht im Bereich von 500 bis 3000 g/mol,
(ii.2) mindestens ein Polysiloxan der allgemeinen Formel Ia

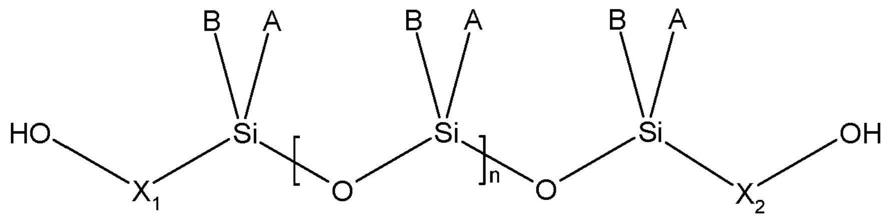

(Ia),

wobei n eine ganze Zahl im Bereich von 10 bis 20 ist, A und B beides Methylgruppen sind; $X_1$ eine $(CH_2-CH_2-O-)_m$-Gruppe ist, $X_2$ eine $(O-CH_2-CH_2)_m$-Gruppen ist, wobei m für $X_1$, $X_2$ gleich und eine ganze Zahl im Bereich von 3 bis 15 ist;

(iii) eine Kettenverlängererzusammensetzung, welche mindestens 1,2-Ethandiol oder 2,4-Diamino-3,5-di(methylthio)toluol, bevorzugt 2,4-Diamino-3,5-di(methylthio)toluol, umfasst.

Eine bevorzugte Ausführungsform (29), welche eine der Ausführungsformen (23) bis (28) konkretisiert, betrifft das Verfahren zur Herstellung eines Polyurethans, insbesondere eines thermoplastischen Polyurethans, umfassend die Umsetzung der Komponenten (i) bis (iii) und zusätzlich
(iv) einer Antioxidantzusammensetzung, wobei die Antioxidantzusammensetzung mindestens ein Antioxidant ausgewählt aus den sterisch gehinderten Phenole, bevorzugt ausgewählt aus den sterisch gehinderten Phenolen, welche mindestens in ortho-Position benachbart zur OH-Gruppe eine tert-Butylgruppe aufweisen, weiter bevorzugt ausgewählt aus der Gruppe bestehend aus Ethylenbis(oxyethylen)bis-(3-(5-tert-butyl-4-hydroxy-m-tolyl)-propionat) (Irganox 245 FF, CAS-Nummer 36443-68-2), Octadecyl-3-(3,5-di-tert-butyl-4-hydroxyphenyl)-propionat (Irganox 1076, CAS-Nummer 2082-79-3), Octyl-3,5-di-tert-butyl-4-hydroxy-hydrocinnamat (Irganox 1135, CAS-Nummer 125643-61-0), N,N'-Hexan-1,6-diylbis[3-(3,5-di-tert-butyl-4-hydroxyphenylpropionamid] (Irganox 1098, CAS-Nummer 23128-74-7), Pentaerythritol tetrakis(3-(3,5-di-tert-butyl-4-hydroxyphenyl)propionat) (Irganox 1010, CAS-Nummer 6683-19-8) und 3,5-Bis(tert-butyl)-4-hydroxytoluol (BHT, CAS-Nummer 128-37-0), weiter bevorzugt ausgewählt aus der Gruppe bestehend aus Pentaerythritol tetrakis(3-(3,5-di-tert-butyl-4-hydroxyphenyl)propionat), N,N'-Hexan-1,6-diylbis[3-(3,5-di-tert-butyl-4-hydroxyphenylpropionamid] und einer Mischung aus Pentaerythritol tetrakis(3-(3,5-di-tert-butyl-4-hydroxyphenyl)propionat) und N,N'-Hexan-1,6-diylbis[3-(3,5-di-tert-butyl-4-hydroxyphenyl-propionamid], enthält.

Eine Ausführungsform (30) betrifft die Verwendung eines Polyurethans, insbesondere eines thermoplastischen Polyurethans, gemäß einer der Ausführungsformen (1) bis (22) oder eines Polyurethans, insbesondere eines thermoplastischen Polyurethans, erhältlich oder erhalten nach einem Verfahren gemäß einer der Ausführungsformen (24) bis (29) zur Herstellung eines Formkörpers, eines Spritzgussprodukts, eines Extrusionsprodukts, oder einer Folie.

Eine Ausführungsform (31) betrifft die Verwendung eines Polyurethans, insbesondere eines thermoplastischen Polyurethans, gemäß einer der Ausführungsformen (1) bis (22) oder eines Polyurethans, insbesondere eines thermoplastischen Polyurethans, erhältlich oder erhalten nach einem Verfahren gemäß einer der Ausführungsformen (24) bis (29) für einen Artikel ausgewählt ist aus der Gruppe bestehend aus Konsumentenartikel, bevorzugt ausgewählt aus der Gruppe bestehend aus Bekleidungsartikel, insbesondere Schuh und Schuhbestandteil, insbesondere Mittelsohle, Außensohle und Schnürsenkel; Schmuck und Schmuckbestandteil, insbesondere für ein Smartdevice oder für Überwachungselektronik, bevorzugt ausgewählt aus der Gruppe bestehend aus Armband, Armbandbestandteil, Umhängeband und Umhängebandbestandteil, Körpergurt und Körpergurtbestandteil, Brille und Brillenbestandteil; Sportzubehörartikel, insbesondere Sportband, Dehnungsband; Dämpfungsmaterial; Schaumstoffpartikel; gewebter Artikel; nicht-gewebter Artikel; Reinigungsartikeln für mobile Fahr- oder Fluggeräte, insbesondere Scheibenwischer; medizinischer Artikel, insbesondere Verbandsartikel, Schlauch, transdermales System, Bestandteil eines transdermalen Systems, insbesondere Pflaster, Bestandteil eines Pflasters; Möbelteil; Kissen, Kisssenbestandteil; Matratze, Matratzenbestandteil; Automobilzubehörteil, insbesondere Automobilkabelummantelung oder-schlauch; Folie, insbesondere Fußbodenfolie, Skifolie, Schutzfolie; Schutzhülle; Designelement für elektrische Bauteile.

Eine Ausführungsform (31) betrifft einen Artikel, umfassend ein Polyurethan, insbesondere ein thermoplastisches Polyurethan, gemäß einer der Ausführungsformen (1) bis (223) oder ein Polyurethans, insbesondere eines thermoplastischen Polyurethans, erhältlich oder erhalten nach einem Verfahren gemäß einer der Ausführungsformen (24) bis (29).

**Angeführte Literatur**

"Kunststoffhandbuch, Band 7, Polyurethane" Carl Hanser Verlag, 3. Auflage, 1993, Kapitel 3.1, 3.2 und 3.3.2, S. 103-113
EP 0 922 552 A1
WO 2006/082183 A1
WO 2005/023920 A1
WO 2007/082838 A1
WO 2013/153190 A1
WO 2014/198779 A1
WO 2010/076224 A1
US 9097835 B2
WO 94/20568 A1
WO 2007/082838 A1
WO2017/030835 A1
WO 2013/153190 A1
WO 2010/010010 A1
Saechtling (Hg.), Kunststoff-Taschenbuch, 27. Auflage, Hanser-Verlag München 1998, Kap. 3.2.1 und 3.2.4
WO 2014/150122 A1
WO 2014/150124 A1
EP 1 979 401 B1
US 2015/0337102 A
EP 2 872 309 B1
EP 3 053 732 A
WO 2016/146537 A1
EP 17198591.4
DE 28 17 457 A1

Die nachfolgenden Beispiele dienen der Veranschaulichung der Erfindung, sind aber in keiner Weise einschränkend hinsichtlich des Gegenstands der vorliegenden Erfindung.

## BEISPIELE

### 1. Chemikalien

| Bezeichnung | Chemische Bezeichnung |
|---|---|
| Isocyanat 1 | 4,4'-Diphenylmethandiisocyanat (4,4'-MDI) |
| Isocyanat 2 | Hexamethylen-1,6-diisocyanat (HDI) |
| Kettenverlängerer 1 | 1,4-Butandiol (BDO) |
| Kettenverlängerer 2 | 1,6-Hexandiol (1,6-HDO) |
| Kettenverlängerer 3 | 1,2-Ethandiol (MEG) |
| Kettenverlängerer 4 | Aromatisches Diamin (>95 Gew.% 2,4-Diamino-3,5-di(methylthio)toluol) |
| Antioxidant 1 | Pentaerythritoltetrakis[3-[3,5-di-tert-butyl-4-hydroxyphenyl]propionat |
| Antioxidant 2 | N,N'-1,6-Hexandiylbis[3,5-bis(1,1-dimethylethyl)-4-hydroxy-benzolpropanamid |
| Antioxdant 3 | Mischung aus Antioxidant 1 und Antioxidant 2 im Verhältnis von 1:1 |
| Antioxidant 3 | Mischung aus Antioxidant 1 und Antioxidant 2 |
| Polyol 1 | Polytetramethylenetherglykol (PTHF) mit einer OH-Zahl im Bereich von 109,5-115,1 mg KOH/g |
| Polyol 2 | Polyesterdiol mit einer Hydroxylzahl von 56 mg KOH/g aufgebaut aus Adipinsäure, 1,4-Butandiol und 1,6-Hexandiol; zahlenmittleres Molekulargewicht $M_n$: 2000 g/mol (ADS/BDO/HDO) |

(fortgesetzt)

| Bezeichnung | Chemische Bezeichnung |
|---|---|
| Hydrolysestabilisator | Polymer auf Basis von Carbodiimid und Polyglykolether |
| Weichmacher | Tributyl-O-acetylcitrat |
| Antiblockmittel | Ethylenbis-stearamid |
| Katalysator 1 | Zinn-Katalysator Kosmos® 29 der Firma Evonik |
| Si-Polyol 1 | difunktionelles Polyol mit 59% PDMS und 41% EO Anteil und mit einer OH-Zahl von 62 mg KOH/g |
| Si-Polyol 2 | difunktionelles Polyol mit 55% PDMS und 45% EO Anteil und mit einer OH-Zahl von 57 mg KOH/g |
| Si-Polyol 3 | difunktionelles Polyol mit 72% PDMS und 28% EO Anteil und mit einer OH-Zahl von 65 mg KOH/g |
| PDMS: Polydimethylsiloxan<br>EO: Ethylenoxid | |

**2. Meßmethoden**

| | |
|---|---|
| Zugfestigkeit: | DIN 53504 |
| Reißdehnung: | DIN 53504 |
| Reißfestigkeit: | DIN ISO 34-1 Bb |
| Weiterreißfestigkeit: | DIN ISO 34-1 Bb |
| Shore-Härte: | DIN ISO 7619-1 |
| Abriebsbestimmung: | DIN ISO 4649 |
| Heißluftbeständigkeit: | DIN 53508 |
| Schmelze-Massefließrate (MFR): | DIN EN ISO 1133 (Stand März 2012) |

Der Hartsegmentgehalt (Hartphasenanteil) wurde gemäß der Formel aus WO 2010/076224 A1 bzw. US 9097835 B2 bestimmt:

$$Hartphasenanteil = \{\sum_{x=1}^{k}[(m_{KVx} / M_{KVx})^{*} M_{Iso} + m_{KVx}]\} / m_{ges}$$

mit den folgenden Bedeutungen:

| | |
|---|---|
| $Mkv_x$: | Molare Masse des Kettenverlängerers x in g/mol |
| $mKV_x$: | Masse des Kettenverlängerers x in g |
| $M_{IS0}$: | Molare Masse des verwendeten Isocyanates in g/mol |
| $m_{ges}$: | Gesamtmasse aller Ausgangsstoffe in g |
| k: | Anzahl der Kettenverlängerer. |

**3. Vergleichs-Beispiel 1* - Herstellung eines Si-basierten thermoplastischen Polyurethans (TPU) mit aromatischem Isocyanat**

In einer 2 Liter Weißblechdose wurden 660 g Polyol 1 und 440 g Si-Polyol 3 zusammen mit 72,28 g Kettenverlängerer 1 eingewogen und kurz mit Stickstoff beschleiert. Die Dose wurde mit einem geeigneten Deckel verschlossen und im Heizschrank auf ca. 90 °C aufgeheizt. Die flüssigen Komponenten in der Dose wurden auf einer Hebebühne mittels Propellerrührer gemischt. Anschließend wurden 8,1 g Antioxidant 1 und 8,1g Antioxidant 2 hinzugegeben und verrührt. Bei 80 °C erfolgte die Zugabe von 433,61 g Isocyanat 1. Die Gesamtrezeptur ist in Tabelle 1 wiedergegeben.

Das Isocyanat 1 hatte eine Temperatur von 45 °C. Eine Durchmischung erfolgte mittels Propellerrüher bei 200u/min. Bei Erreichen von 110 °C wurde die Reaktionsmischung in eine Teflonschale gegossen. Die Teflonschale befand sich auf einem Heiztisch mit 125 °C. Nach 10 min wurde die feste Schwarte vom Heiztisch genommen und anschließend für 24h im Heizschrank bei 80 °C getempert. Die ausgekühlte Schwarte wurde in einer Schneidmühle zerkleinert. Das entstandene Granulat wurde für 3h bei 110 °C getrocknet. Mittels Spritzgussverfahren wurden 2mm und 6mm Prüfkörper hergestellt und entsprechend den Anforderungen der jeweiligen DIN-Norm verwendet.

**4. Beispiele 2 bis 4 - Herstellung Si-basierter TPUs mit aromatischem Isocyanat**

Weitere Si-basierte TPUs mit aromatischem Isocyanat wurden analog der Vorschrift von Beispiel 1 hergestellt, wobei die einzelnen Komponenten in den in Tabelle 1 angegebenen Mengen (Rezepturen) eingesetzt wurden.

Tabelle 1: Rezepturen für Vergleichs-Beispiel 1* und die Beispiele 2 bis 4

| | Vergleichs-Beispiel 1* | Beispiel 2 | Beispiel 3 | Beispiel 4 |
|---|---|---|---|---|
| Polyol 1 | 660,00 g | 950,00 g | 900,00 g | 880,00 g |
| Si Polyol 3 | 440,00 g | 50,00 g | 100,00 g | 220,00 g |
| Kettenverlängerer 1 | 72,28 g | 67,82 g | 67,52 g | 73,61 g |
| Isocyanat 1 | 433,61 g | 439,01 g | 432,60 g | 461,78 g |
| Antioxidant 1 | 8,11 g | 7,61 g | 7,58 g | 8,26 g |
| Antioxidant 2 | 8,11 g | 7,61 g | 7,58 g | 8,26 g |

**5. Bestimmung der mechanischen Eigenschaften von Si-basiertenTPUs mit aromatischem Isocyanat**

Für die Prüfkörper gemäß Vergleichs-Beispiel 1* und den Beispielen 2, 3 und 4 wurden die Zugfestigkeit, die Reißdehnung und die Shore-Härte gemessen, sowie der Hartsegmentgehalt und der Abrieb bestimmt. Die nachfolgende Tabelle 2 gibt die Ergebnisse der Prüfungen wieder.

Tabelle 2: Ergebnisse der mechanischen Untersuchungen für die Si-basierten TPUs mit aromatischem Isocyanat gemäß Vergleichs-Beispiel 1* und den Beispielen 2, 3 und 4

| | Si-polyol 3 | Hartsegmentgehalt | Zugfestigkeit | MFR (190°C/21,6 kg) [g/10min] |
|---|---|---|---|---|
| Vergleichs-Beispiel 1* | 40 Gew.-% | 17 Gew.-% | Nicht spritzbar | Fließt durch |
| Beispiel 2 | 5 Gew.-% | 17 Gew.-% | >35MPa | 40 |
| Beispiel 3 | 10 Gew.-% | 17 Gew.-% | >35 MPa | 80,4 |
| Beispiel 4 | 20 Gew.-% | 17 Gew.-% | >15 MPa | Fließt durch |

Tabelle 2 - Fortsetzung

| | Reiß-dehnung | Rei β-festigkeit | Shore-Härte (Shore A) | Abrieb |
|---|---|---|---|---|
| Vergleichs-Beispiel 1* | Nicht spritzbar | Nicht spritzbar | Nicht spritzbar | Nicht spritzbar |
| Beispiel 2 | >500% | >40 kN/m | <75A | <15 $mm^3$ |
| Beispiel 3 | >500% | >40 kN/m | <75A | <15 $mm^3$ |
| Beispiel 4 | >500% | >35 kN/m | <75A | <15 $mm^3$ |

Es wurde überraschenderweise gefunden, dass bei einem Si-basiertem TPU mit einem Gehalt an Si-Polyol, insbesondere Si-Polyol 3, im Bereich von 5-20 Gew-%, die mechanischen Eigenschaften, insbesondere die Zugfestigkeit, Reißdehnung und Reißfestigkeit im Vergleich zu einem Si-basierten TPU mit einem Gehalt von 40 Gew.-% signifikant verbessert waren. Der Abrieb lag bei allen Beispielen unterhalb von 15 $mm^3$; dies ist eine überraschende Verbesserung

gegenüber Standard-TPUs die kein Polysiloxan enthalten und auch eine Shore A Härte von 70 aufweisen.

**6. Vergleichs-Beispiel 5*** - **Herstellung eines Si-basierten TPUs mit aliphatischem Isocyanat**

Ein Si-basiertes TPU mit einem Gehalt von 40 Gew-% an Si-Polyol 3 wurde gemäß der Vorschrift aus Vergleichs-Beispiel 1* erzeugt, wobei die Mengen der eingesetzten Komponenten in Tabelle 3 wiedergegeben sind. Anstelle des aromatischen Isocyanats 1 aus Vergleichsbeispiel 1* wurde das aliphatische Isocyanat 2 verwendet. Die Herstellung von Prüfkörpern war nicht möglich, da sich das TPU nicht mittels Spritzgussverfahren verarbeiten ließ.

**7. Beispiele 6 bis 8** - **Herstellung Si-basierter TPUs mit aliphatischem Isocyanat**

Si-basierte TPUs mit einem Gehalt an Si-Polyol 3 im Bereich von 5 bis 20 Gew-% wurde gemäß der Vorschrift aus Vergleichs-Beispiel 1* erzeugt, wobei die Mengen der eingesetzten Komponenten in Tabelle 3 wiedergegeben sind. Anstelle des aromatischen Isocyanats 1 aus Vergleichs-Beispiel 1* wurde das aliphatische Isocyanat 2 verwendet. Gemäß der Vorschrift aus Vergleichsbeispiel 1 wurden mittels Spritzgussverfahren 2mm und 6mm Prüfkörper hergestellt.

Tabelle 3: Rezepturen für Vergleichs-Beispiel 5* und die Beispiele 6 bis 8

| | Vergleichs-Beispiel 5* | Beispiel 6 | Beispiel 7 | Beispiel 8 |
|---|---|---|---|---|
| Polyol 1 | 600,00 g | 950,00 g | 900,00 g | 800,00 g |
| Si Polyol 3 | 400,00 g | 50,00 g | 100,00 g | 200,00 g |
| Kettenverlängerer 2 | 96,51 g | 98,76 g | 98,45 g | 97,81 g |
| Isocyanat 2 | 279,21 g | 309,04 g | 304,85 g | 296,47 g |
| Katalysator 1 in 50% Dioctyladipat(DOA) | 688 μl | 704 μl | 702 μl | 697 μl |
| Antioxidant 1 | 6,95 g | 7,12 g | 7,58 g | 8,26 g |
| Antioxidant 2 | 6,95 g | 7,12 g | 7,58 g | 8,26 g |

**8. Bestimmung der mechanischen Eigenschaften von Si-basiertenTPUs mit aliphatischem Isocyanat**

Für die Prüfkörper gemäß Vergleichs-Beispiel 5* und den Beispielen 6 bis 8 wurden Zugfestigkeit, Reißdehnung, Reißfestigkeit und Shore-Härte gemessen und der Hartsegmentgehalt bestimmt. Die nachfolgende Tabelle 4 gibt die Ergebnisse der Prüfungen wieder.

Tabelle 4: Ergebnisse der mechanischen Untersuchungen für die Si-basierten TPUs mit aliphatischem Isocyanat des Beispiels 5 und der Beispiele 6 bis 8.

| | Si-polyol 3 [Gew.-%] | Hartsegmentgehalt [Gew.-%] | Zugfestigkeit | MFR (190°C/3,8 kg) [g/10min] |
|---|---|---|---|---|
| Vergleichs-Beispiel 5* | 40 | 17 (Not injection moldable) | n.m. | 214,7 |
| Beispiel 6 | 5 | 17 | >20MPa | 28,8 |
| Beispiel 7 | 10 | 17 | >20 MPa | 54,07 |
| Beispiel 8 | 20 | 17 | >15 MPa | 116,98 |
| n.m.: nicht meßbar | | | | |

Tabelle 4 - Fortsetzung

| | Reißdehnung | Reißfestigkeit | Shore-Härte (Shore A) |
|---|---|---|---|
| Vergleichs-Beispiel 5* | n.m. | n.m. | n.m. |
| Beispiel 6 | >500% | >30 kN/m | < 90A |
| Beispiel 7 | >500% | >30 kN/m | < 90A |

(fortgesetzt)

| | Reißdehnung | Reißfestigkeit | Shore-Härte (Shore A) |
|---|---|---|---|
| Beispiel 8 | >500% | >30 kN/m | < 90A |

Die Si-basierten TPUs mit aliphatischem Isocyanat wiesen bei einem Si-Polyol-Gehalt im Bereich von 5 bis 20 Gewichts-%, eine verbesserte Zugfestigkeit von in jedem Fall > 15 MPa und eine Reißfestigkeit von >30 kN/m auf.

**9. Vergleichsbeispiel 1 - Herstellung eines TPUs mit aromatischem Isocyanat ohne Si-Polyol**

Ein TPU ohne Si-Polyol wurde gemäß der Vorschrift aus Vergleichs-Beispiel 1* erzeugt, wobei die Mengen der eingesetzten Komponenten in Tabelle 5 wiedergegeben sind. Gemäß der Vorschrift aus Vergleichs-Beispiel 1* wurden mittels Spritzgussverfahren 2mm und 6mm Prüfkörper hergestellt.

10. **Beispiele 9 und 10 - Herstellung Si-basierter TPUs mit aromatischem Isocyanat und verschiedenen Si-Polyolen**

Si-basierte TPUs mit einem Gehalt an Si-Polyol 2 (Beispiel 7, 10 Gew.-%) oder Si-Polyol 1 (Beispiel 8, 20 Gew.-%) im Bereich von 10 bis 20 Gew-% wurde gemäß der Vorschrift aus Vergleichsbeispiel 1 erzeugt, wobei die Mengen der eingesetzten Komponenten in Tabelle 5 wiedergegeben sind. Gemäß der Vorschrift aus Vergleichs-Beispiel 1* wurden mittels Spritzgussverfahren 2mm und 6mm Prüfkörper hergestellt.

Tabelle 5: Rezepturen für Vergleichsbeispiel 1 und die Beispiele 9 und 10

| | Vergleichsbeispiel 1 | Beispiel 9 | Beispiel 10 |
|---|---|---|---|
| Polyol 2 | 1000,00 g | 720,00 g | 640,00 g |
| Si-Polyol | -- | 2 | 1 |
| Menge an Si-Polyol | 0,00 g | 80,00 g | 160,00 g |
| Kettenverlängerer 1 | 164,3 g | 164,28 g | 164,62 g |
| Isocyanat 1 | 560,00 g | 560,0 g | 560,0 g |
| Hydrolysestabilisator | 6,40 g | 6,4 g | 6,4 g |

**11. Bestimmung der thermischen Beständigkeit von Si-basiertenTPUs mit aromatischem Isocyanat (Langzeittest)**

Die Prüfkörper gemäß Vergleichsbeispiel 1 und den Beispielen 9 und 10 wurden Langzeit-Heißluft-Alterungstests unterzogen und auf ihre Heißluftbeständigkeit untersucht. Hierfür wurden alle Prüfkörper für 3000 Stunden bei 165 °C in Luft gelagert, zuvor und anschließend wurde die Reißdehnung bestimmt. Die Ergebnisse sind in Tabelle 6 wiedergegeben.

Tabelle 6: Reißdehnungswerte des Vergleichsbeispiels 1 und der Beispiele 9 und 10 jeweils vor und nach thermischer Alterung (Langzeittest)

| | Shore-Härte (Shore A) vor thermischer Alterung | Reißdehnung vor thermischer Alterung | Reißdehnung nach thermischer Alterung | MFR (220°C/ 2,16 kg) [g/ 10min] |
|---|---|---|---|---|
| Vergleichs-beispiel 1 | 95A | >500% | Prüfkörper geschmolzen | 7,13 |
| Beispiel 9 | 95A | >500% | >300% | 65,7 |
| Beispiel 10 | 95A | >500% | >300% | 103,5 |

Es konnte beobachtet werden, dass die thermische Alterung für den Prüfkörper gemäß Vergleichsbeispiel 1

zu einer Verformung führte und dass nach 2000 Stunden Lagerung bei 165 °C die Reißdehnung unterhalb von 50% gefallen war. Im Gegensatz hierzu zeigten die Prüfkörper gemäß den Beispielen 9 und 10, welche beide Si-Polyol in 10 bis 20 Gew-% enthielten, nach der thermischen Alterung eine Reißdehnung größer 50% im Vergleich zur Reißdehnung vor thermischer Alterung. Die Einbringung eines Si-Polyols führt somit erwiesenermaßen zu einer Verbesserung in den Alterungseigenschaften.

**12. Vergleichsbeispiel 2 - Herstellung eines TPUs mit aromatischem Isocyanat ohne Si-Polyol**

Ein TPU ohne Si-Polyol wurde gemäß der Vorschrift aus Vergleichs-Beispiel 1* erzeugt, wobei die Mengen der eingesetzten Komponenten in Tabelle 7 wiedergegeben sind. Gemäß der Vorschrift aus Vergleichsbeispiel 1 wurden mittels Spritzgussverfahren 2mm und 6mm Prüfkörper hergestellt.

13. **Beispiele 11 und 12 - Herstellung Si-basierter TPUs mit aromatischem Isocyanat und verschiedenen Si-Polyolen, sowie verschiedenen Kettenverlängem**

Si-basierte TPUs mit einem Gehalt an Si-Polyol 2 von 10 Gew.-% (Beispiel 11) oder 20 Gew.-% (Beispiel 12) wurde gemäß der Vorschrift aus Vergleichsbeispiel 1 erzeugt, wobei die Mengen der eingesetzten Komponenten in Tabelle 7 wiedergegeben sind. Gemäß der Vorschrift aus Vergleichs-Beispiel 1* wurden mittels Spritzgussverfahren 2mm und 6mm Prüfkörper hergestellt.

Tabelle 7: Rezepturen für Vergleichsbeispiel 2 und die Beispiele 11 und 12

| | Vergleichsbeispiel 2 | Beispiel 11 | Beispiel 12 |
|---|---|---|---|
| Polyol 1 | 900,00 g | 765,00 g | 680,00 g |
| Si Polyol 2 | 0,00 g | 85,00 g | 170,00 g |
| Kettenverlängerer 3 (Diol) | 33,26 g | 0 | 0 |
| Kettenverlängerer 4 (Diamin) | 0,0 g | 118,62 g | 128,72 g |
| Weichmacher | 335,5 g | 343,68 | 346,31 g |
| Isocyanat 1 | 372,15 g | 351,48 g | 351,48 g |
| Antiblockmittel | 9,73 g | 9,97 g | 10,04 g |
| Antioxidant 1 | 8,11 g | 8,6 g | 8,66 g |
| Antioxidant 2 | 8,11 g | 8,6 g | 8,66 g |

**14. Bestimmung der thermischen Beständigkeit von Si-basiertenTPUs mit aromatischem Isocyanat (Kurzzeittest)**

Die Prüfkörper gemäß Vergleichsbeispiel 2 und den Beispielen 11 und 12 wurden Kurzzeit-Heißluft-Alterungstests unterzogen und auf ihre Heißluftbeständigkeit untersucht. Hierfür wurden alle Prüfkörper für 6 Stunden bei 200 °C in Luft gelagert, zuvor und anschließend wurde die Reißdehnung bestimmt. Die Ergebnisse sind in Tabelle 8 wiedergegeben.

Tabelle 8: Reißdehnungswerte des Vergleichsbeispiels 2 und der Beispiele 11 und 12 jeweils vor und nach thermischer Alterung (Kurzzeittest)

| | Shore-Härte (Shore A) vor thermischer Alterung | Reißdehnung vor thermischer Alterung | Reißdehnung nach thermischer Alterung | MFR 190°C/10 kg [g/10min] |
|---|---|---|---|---|
| Vergleichs-beispiel 2 | 55A | >500% | geschmolzen | 26,6 |
| Beispiel 11 | 55A | >400% | >300% | 89,0 |
| Beispiel 12 | 55A | >500% | >300% | 330 |

Die mechanische Performanz eines TPUs mit einer geringen Shore-A-Härte (55A), welches kein Si-Polyol

aufwies (Vergleichsbeispiel 2) wurde durch die thermische Alterung selbst im Kurzzeittest signifikant beeinträchtigt - der Prüfkörper schmolz bereits innerhalb weniger Minuten. Im Gegensatz dazu zeigten die Si-basierten TPUs, hier mit Si-Polyol 2 insbesondere in Verbindung mit Kettenverlängerer 4, obwohl sie eine Shore-A-Härte von nur 55A aufwiesen, in der thermischen Alterung nur eine geringe Verschlechterung der Reißdehnung - diese bliebt selbst nach 6 Stunden noch bei über 300%; zusätzlich blieben die Prüfkörper gemäß den Beispielen 11 und 12 beide formstabil. Da Standard-TPU-Materialien im Normalfall bei Temperaturen oberhalb von 180 °C geschmolzen sind, ist dies eine sehr gute Alterungsperformanz, die durch den Einbau des Si-Polyols, insbesondere in Verbindung mit dem Diamin Kettenverlängerer 4, bedingt ist.

**15. Vergleichs-Beispiele 13* bis 15*** - **Herstellung Si-basierter TPUs mit aromatischem Isocyanat und verschiedenen Hartsegmentantellen bzw. verschiedenen Gehalten an SI-Polyol**

Weitere Si-basierte TPUs mit aromatischem Isocyanat wurden analog der Vorschrift von Beispiel 1 hergestellt, wobei die einzelnen Komponenten in den in Tabelle 9 angegebenen Mengen (Rezepturen) eingesetzt wurden; Si Polyol 3 und Polyol 1 wurden dabei immer gleichbleibend im Gewichtsverhältnis Si Polyol 3 : Polyol 1 von 4 : 1 eingesetzt.

Tabelle 9: Rezepturen für Beispiele 13 bis 15

| | Vergleichs-Beispiel 13* [g] | Vergleichs-Beispiel 14* [g] | Vergleichs-Beispiel 15* [g] |
|---|---|---|---|
| Polyol 1 | 200 | 160 | 130 |
| Si Polyol 3 | 800 | 640 | 520 |
| Kettenver längerer 1 | 102,55 | 164,08 | 199,98 |
| Isocyanat 1 | 446,77 | 585,24 | 660,61 |
| Antioxidant 1 | 7,82 | 7,82 | 7,63 |
| Antioxidant 2 | 7,82 | 7,82 | 7,63 |

Für die Prüfkörper gemäß Vergleichs-Beispielen 13* bis 15* wurden der Weiterreißfestigkeit die Reißdehnung und die Shore-Härten A und D gemessen, sowie der Hartsegmentgehalt bestimmt. Die nachfolgende Tabelle 17 gibt die Ergebnisse der Prüfungen wieder.

Tabelle 10: Ergebnisse der mechanischen Untersuchungen für die Si-basierten TPUs mit verschiedenen Hartsegmentanteilen gemäß Vergleichs-Beispielen 13* bis 15*

| | Hartsegmentgehalt [Gewichts-%] | Shore A | Shore D | Zugfestigkeit [MPa] | Reiß-dehnung [%] | Weiterreißfestigkeit [kN/m] |
|---|---|---|---|---|---|---|
| Vergleichs-Beispiel 13* | 25 | 74 | 15 | / | / | 6 |
| Vergleichs-Beispiel 14* | 40 | 94 | 36 | 7 | 20 | 13 |
| Vergleichs-Beispiel 15* | 50 | 98 | 57 | 19 | 240 | 87 |

Es wurde überraschenderweise gefunden, dass bei einem Si-basiertem TPU mit einem hohen Polysiloxandiol-Anteil, in Vergleichs-Beispiel 13*-15* von 80 Gew.-%, bezogen auf den Polyolanteil, sich die mechanischen Eigenschaften, insbesondere die Zugfestigkeit, Reißdehnung und die Weiterreißfestigkeit, signifikant verschlechtern. Die o.a. Beispiele zeigen, dass sich dies für einem breiten Bereich des HS-Anteils beobachten lässt.

## Patentansprüche

1. Polyurethan, insbesondere thermoplastisches Polyurethan, erhältlich oder erhalten durch Umsetzung von mindestens den Komponenten (i) bis (iii):

(i) eine Polyisocyanatzusammensetzung;
(ii) eine Polyolzusammensetzung, umfassend

(ii.1) mindestens ein Polyester- oder Polyetherdiol mit einem zahlenmittleren Molekulargewicht im Bereich von 500 bis 3000 g/mol,
(ii.2) mindestens ein Polysiloxan der allgemeinen Formel I

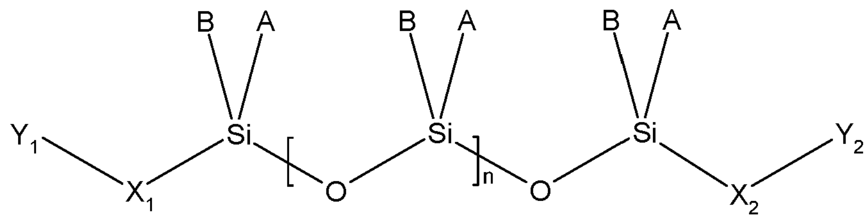

(I),

wobei n eine ganze Zahl im Bereich von 1 bis 250 ist, A und B unabhängig voneinander ausgewählt sind aus der Gruppe der C1-C20-Alkylgruppen, wobei $X_1$ des Polysiloxans gemäß (ii.2) eine $(CH_2\text{-}CH_2\text{-}O)_m$-Gruppe oder eine $(CH_2\text{-}CH_2\text{-}CH_2\text{-}O)_m$-Gruppe oder eine $(CH_2\text{-}CHCH_3\text{-}O)_m$-Gruppe ist, $X_2$ des Polysiloxans gemäß (ii.2) eine $(CH_2\text{-}CHCH_3\text{-}O)_m$ Gruppe oder eine $(O\text{-}CH_2\text{-}CH_2)_m$-Gruppe oder eine $(O\text{-}CH_2\text{-}CH_2\text{-}CH_2)_m$-Gruppe ist, wobei m für $X_1$, $X_2$ jeweils unabhängig eine ganze Zahl im Bereich von 2 bis 20 ist; und $Y_1$ und $Y_2$ beide eine Hydroxylgruppe sind;
wobei das mindestens eine Polysiloxan gemäß (ii.2) in einem Anteil im Bereich von 5 bis 20 Gewichts-%, bezogen auf das Gesamtgewicht aller Komponenten (ii.1) und (ii.2) enthalten ist;

(iii) eine Kettenverlängererzusammensetzung.

**2.** Polyurethan, insbesondere thermoplastisches Polyurethan, gemäß Anspruch 1, wobei A und B des Polysiloxans gemäß (ii.2) unabhängig voneinander ausgewählt sind aus der Gruppe der C1- bis C5-Alkylgruppen, bevorzugt A und B jeweils gleich sind und ausgewählt sind aus der Gruppe der C1- bis C5-Alkylgruppen, wobei weiter bevorzugt A und B beide eine Methylgruppe sind.

**3.** Polyurethan, insbesondere thermoplastisches Polyurethan, gemäß Anspruch 1 oder 2, wobei das Polyurethan einen Hartsegmentanteil im Bereich von 10 bis 50 Gewichts-%, bevorzugt von 17 bis 30 Gewichts-%, bezogen auf das Gesamtgewicht aller Komponenten (i), (ii), (iii), aufweist,
und/oder
wobei das Polyurethan eine Härte im Bereich von Shore 30A bis 98A oder im Bereich von Shore 40D bis 64D, bevorzugt im Bereich von Shore 30A bis 95A, weiter bevorzugt im Bereich von Shore 70A bis 95A, aufweist.

**4.** Polyurethan, insbesondere thermoplastisches Polyurethan, gemäß einem der Ansprüche 1 bis 3, erhältlich oder erhalten durch Umsetzung von mindestens den Komponenten (i) bis (iii):

(i) eine Diisocyanatzusammensetzung, welche mindestens 4,4'-MDI oder HDI umfasst;
(i) eine Polyolzusammensetzung, umfassend

(ii.1) mindestens ein Polyetherdiol, bevorzugt PTHF, oder ein Polyesterdiol, wobei das Polyether- oder Polyesterdiol ein zahlenmittleres Molekulargewicht im Bereich von 500 bis 3000 g/mol aufweist,
(ii.2) mindestens ein Polysiloxan der allgemeinen Formel Ia

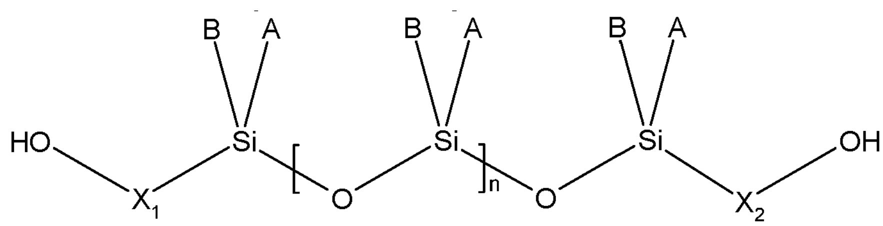

(Ia),

wobei n eine ganze Zahl im Bereich von 10 bis 20 ist, A und B beides Methylgruppen sind; $X_1$ eine $(CH_2\text{-}CH_2\text{-}O\text{-})_m$-Gruppe ist, $X_2$ eine $(O\text{-}CH_2\text{-}CH_2)_m$-Gruppen ist, wobei m für $X_1$, $X_2$ jeweils unabhängig eine ganze Zahl im Bereich von 3 bis 15 ist;

(iii) eine Kettenverlängererzusammensetzung, welche mindestens ein Diol oder Diamin ausgewählt aus der Gruppe bestehend aus 1,4-Butandiol, 1,6-Hexandiol, 1,2-Ethandiol und 2,4-Diamino-3,5-di(methylthio)toluol, umfasst.

**5.** Verfahren zur Herstellung eines Polyurethans, insbesondere eines thermoplastischen Polyurethans, umfassend die Umsetzung der Komponenten (i) bis (iii):

(i) eine Polyisocyanatzusammensetzung;
(ii) eine Polyolzusammensetzung, umfassend

(ii.1) mindestens ein Polyester- oder Polyetherdiol mit einem zahlenmittleren Molekulargewicht im Bereich von 500 bis 3000 g/mol,
(ii.2) mindestens ein Polysiloxan der allgemeinen Formel I

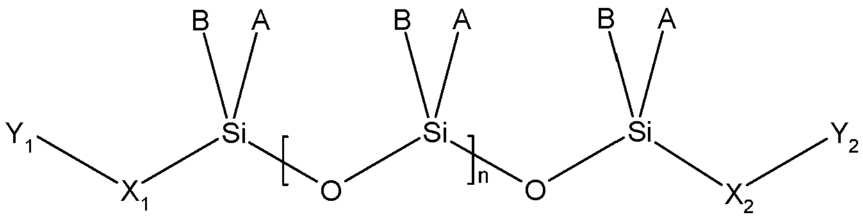

(I),

wobei n eine ganze Zahl im Bereich von 1 bis 250 ist, A und B unabhängig voneinander ausgewählt sind aus der Gruppe der C1-C20-Alkylgruppen, wobei $X_1$ des Polysiloxans gemäß (ii.2) eine $(CH_2\text{-}CH_2\text{-}O)_m$-Gruppe oder eine $(CH_2\text{-}CH_2CH_2\text{-}O)_m$-Gruppe oder eine $(CH_2\text{-}CHCH_3\text{-}O)_m$-Gruppe ist, $X_2$ des Polysiloxans gemäß (ii.2) eine $(O\text{-}CHCH_3\text{-}CH_2)_m$-Gruppe oder eine $(O\text{-}CH_2\text{-}CH_2)_m$-Gruppe oder eine $(O\text{-}CH_2\text{-}CH_2\text{-}CH_2)_m$- Gruppe ist, wobei m für $X_1$, $X_2$ jeweils unabhängig eine ganze Zahl im Bereich von 2 bis 20 ist; und $Y_1$ und $Y_2$ beide eine Hydroxylgruppe sind,
wobei das mindestens eine Polysiloxan gemäß (ii.2) in einem Anteil im Bereich von 5 bis 20 Gewichts-%, bezogen auf das Gesamtgewicht aller Komponenten (ii.1) und (ii.2) enthalten ist;

(iii) eine Kettenverlängererzusammensetzung.

**6.** Verwendung eines Polyurethans, insbesondere eines thermoplastischen Polyurethans, gemäß einem der Ansprüche 1 bis 4 oder eines Polyurethans, insbesondere eines thermoplastischen Polyurethans, erhältlich oder erhalten nach einem Verfahren gemäß Anspruch 5 zur Herstellung eines Formkörpers, eines Spritzgussprodukts, eines Extrusionsprodukts, oder einer Folie, bevorzugt für einen Artikel ausgewählt aus der Gruppe bestehend aus Konsumentenartikel, bevorzugt ausgewählt aus der Gruppe bestehend aus Bekleidungsartikel, insbesondere Schuh und Schuhbestandteil, insbesondere Mittelsohle, Außensohle und Schnürsenkel; Schmuck und Schmuckbestandteil, insbesondere für ein Smartdevice oder für Überwachungselektronik, bevorzugt ausgewählt aus der Gruppe bestehend aus Armband, Armbandbestandteil, Umhängeband und Umhängebandbestandteil, Körpergurt und Körpergurtbestandteil, Brille und Brillenbestandteil; Sportzubehörartikel, insbesondere Sportband, Dehnungsband; Dämpfungsmaterial; Schaumstoffpartikel; gewebter Artikel; nicht-gewebter Artikel; Reinigungsartikeln für mobile Fahr- oder Fluggeräte, insbesondere Scheibenwischer; medizinischer Artikel, insbesondere Verbandsartikel, Schlauch, transdermales System, Bestandteil eines transdermalen Systems, insbesondere Pflaster, Bestandteil eines Pflasters; Möbelteil; Kissen, Kisssenbestandteil; Matratze, Matratzenbestandteil; Automobilzubehörteil, insbesondere Automobilkabelummantelung oder -schlauch; Folie, insbesondere Fußbodenfolie, Skifolie, Schutzfolie; Schutzhülle; Designelement für elektrische Bauteile.

**7.** Artikel, umfassend ein Polyurethan, insbesondere ein thermoplastisches Polyurethan, gemäß einem der Ansprüche 1 bis 4 oder ein Polyurethan, insbesondere ein thermoplastisches Polyurethan, erhältlich oder erhalten nach einem Verfahren gemäß Anspruch 5.

## Claims

1. A polyurethane, in particular thermoplastic polyurethane, obtainable or obtained by reacting at least the components (i) to (iii):

   (i) a polyisocyanate composition;
   (ii) a polyol composition, comprising

      (ii.1) at least one polyester diol or polyether diol having a number-average molecular weight in the range from 500 to 3000 g/mol,
      (ii.2) at least one polysiloxane of general formula I

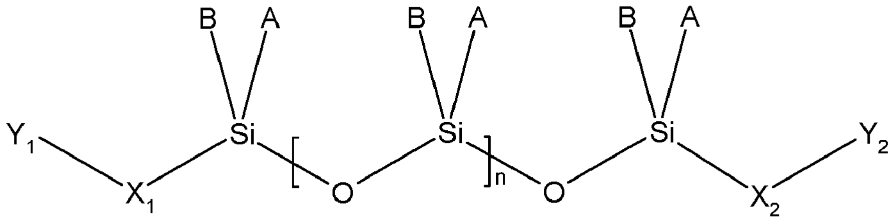

(I),

      where n is an integer in the range from 1 to 250, A and B are independently selected from the group of the C1-C20-alkyl groups, where $X_1$ of the polysiloxane as per (ii.2) is a $(CH_2-CH_2-O)_m$ group or a $(CH_2-CH_2-CH_2-O)_m$ group or a $(CH_2-CHCH_3-O)_m$ group, $X_2$ of the polysiloxane as per (ii.2) is a $(CH_2-CHCH_3-O)_m$ group or an $(O-CH_2-CH_2)_m$ group or an $(O-CH_2-CH_2-CH_2)_m$ group, where m for $X_1$, $X_2$ in each case independently is an integer in the range from 2 to 20; and $Y_1$ and $Y_2$ are both a hydroxyl group; wherein the at least one polysiloxane as per (ii.2) is present in a proportion in the range from 5% to 20% by weight, based on the total weight of all of components (ii.1) and (ii.2);

   (iii) a chain extender composition.

2. The polyurethane, in particular thermoplastic polyurethane, according to claim 1, wherein A and B of the polysiloxane as per (ii.2) are independently selected from the group of the C1- to C5-alkyl groups, preferably A and B are each identical and are selected from the group of the C1- to C5-alkyl groups, wherein more preferably A and B are both a methyl group.

3. The polyurethane, in particular thermoplastic polyurethane, according to claim 1 or 2, wherein the polyurethane has a hard segment content in the range from 10% to 50% by weight, preferably from 17% to 30% by weight, based on the total weight of all of components (i), (ii), (iii),
   and/or
   wherein the polyurethane has a hardness in the range from Shore 30A to 98A or in the range from Shore 40D to 64D, preferably in the range from Shore 30A to 95A, more preferably in the range from Shore 70A to 95A.

4. The polyurethane, in particular thermoplastic polyurethane, according to any of claims 1 to 3, obtainable or obtained by reacting at least the components (i) to (iii):

   (i) a diisocyanate composition comprising at least 4,4'-MDI or HDI;
   (i) a polyol composition, comprising

      (ii.1) at least one polyether diol, preferably PTHF, or one polyester diol, wherein the polyether diol or polyester diol has a number-average molecular weight in the range from 500 to 3000 g/mol,
      (ii.2) at least one polysiloxane of general formula Ia

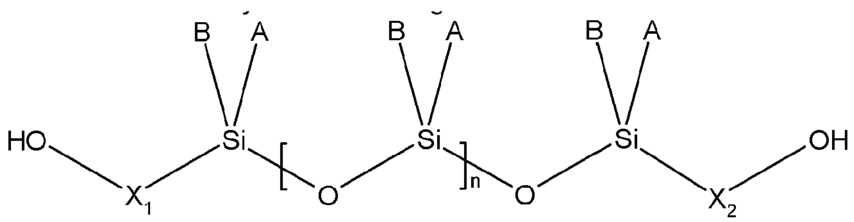
(Ia),

where n is an integer in the range from 10 to 20, A and B are both methyl groups; $X_1$ is a $(CH_2-CH_2-O-)_m$ group, $X_2$ is an $(O-CH_2-CH_2)_m$ group, where m for $X_1$, $X_2$ in each case independently is an integer in the range from 3 to 15;

(iii) a chain extender composition comprising at least one diol or diamine selected from the group consisting of butane-1,4-diol, hexane-1,6-diol, ethane-1,2-diol and 2,4-diamino-3,5-di(methylthio)toluene.

**5.** A process for preparing a polyurethane, in particular a thermoplastic polyurethane, comprising the reaction of the components (i) to (iii):

(i) a polyisocyanate composition;
(ii) a polyol composition, comprising

(ii.1) at least one polyester diol or polyether diol having a number-average molecular weight in the range from 500 to 3000 g/mol,
(ii.2) at least one polysiloxane of general formula I

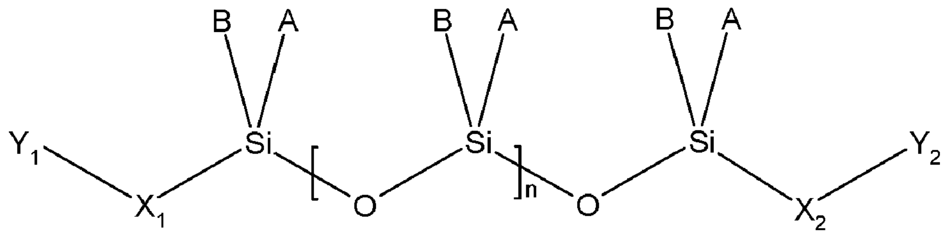
(I),

where n is an integer in the range from 1 to 250, A and B are independently selected from the group of the C1-C20-alkyl groups, where $X_1$ of the polysiloxane as per (ii.2) is a $(CH_2-CH_2-O)_m$ group or a $(CH_2-CH_2-CH_2-O)_m$ group or a $(CH_2-CHCH_3-O)_m$ group, $X_2$ of the polysiloxane as per (ii.2) is an $(O-CHCH_3-CH_2)_m$ group or an $(O-CH_2-CH_2)_m$ group or an $(O-CH_2-CH_2-CH_2)_m$ group, where m for $X_1$, $X_2$ in each case independently is an integer in the range from 2 to 20; and $Y_1$ and $Y_2$ are both a hydroxyl group, wherein the at least one polysiloxane as per (ii.2) is present in a proportion in the range from 5% to 20% by weight, based on the total weight of all of components (ii.1) and (ii.2);

(iii) a chain extender composition.

**6.** The use of a polyurethane, in particular a thermoplastic polyurethane, according to any of claims 1 to 4 or of a polyurethane, in particular a thermoplastic polyurethane, obtainable or obtained by a process according to claim 5 for the production of a molded body, an injection-molded product, an extrusion product, or a film, preferably for an article selected from the group consisting of consumer articles, preferably selected from the group consisting of items of clothing, especially footwear and footwear parts, especially midsoles, outsoles and shoelaces; jewelry and jewelry parts, especially for a smart device or for monitoring electronics, preferably selected from the group consisting of wristbands, wristband parts, lanyards and lanyard parts, body straps and body strap parts, spectacles and spectacle parts; items of sports equipment, especially sport bands, resistance bands; damping materials; foam beads; woven articles; nonwoven articles; cleaning articles for mobile driving or flying devices, especially windshield wipers; medical articles, especially dressing articles, tubes, transdermal systems, parts of a transdermal system, especially plasters, parts of a plaster; furniture parts; cushions, cushion parts; mattresses, mattress parts; automobile accessories, especially automobile cable sheathings or conduits; films, especially flooring films, ski films, protective films; protective covers; design elements for electrical components.

**7.** An article comprising a polyurethane, in particular a thermoplastic polyurethane, according to any of claims 1 to 4 or a polyurethane, in particular a thermoplastic polyurethane, obtainable or obtained by a process according to claim 5.

## Revendications

**1.** Polyuréthane, en particulier polyuréthane thermoplastique, pouvant être obtenu ou obtenu par transformation d'au moins les composants (i) à (iii) :

(i) une composition de polyisocyanate ;
(ii) une composition de polyol, comprenant

(ii.1) au moins un polyesterdiol ou polyétherdiol doté d'un poids moléculaire moyen en nombre dans la plage de 500 à 3 000 g/mole,
(ii.2) au moins un polysiloxane de formule générale I

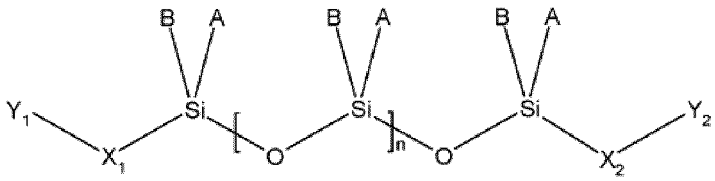

(I),

n étant un nombre entier dans la plage de 1 à 250, A et B indépendamment l'un de l'autre étant choisis dans le groupe des groupes alkyle en C1-C20, $X_1$ du polysiloxane selon (ii.2) étant un groupe $(CH_2\text{-}CH_2\text{-}O)_m$ ou un groupe $(CH_2\text{-}CH_2\text{-}CH_2\text{-}O)_m$ ou un groupe $(CH_2\text{-}CHCH_3\text{-}O)_m$, $X_2$ du polysiloxane selon (ii.2) étant un groupe $(CH_2\text{-}CHCH_3\text{-}O)_m$ ou un groupe $(O\text{-}CH_2\text{-}CH_2)_m$ ou un groupe $(O\text{-}CH_2\text{-}CH_2\text{-}CH_2)_m$, m pour $X_1$, $X_2$ étant à chaque fois indépendamment un nombre entier dans la plage de 2 à 20 ; et $Y_1$ et $Y_2$ étant tous deux un groupe hydroxyle ;
l'au moins un polysiloxane selon (ii.2) étant contenu en une proportion dans la plage de 5 à 20 % en poids, par rapport au poids total de tous les composants (ii.1) et (ii.2) ;

(iii) une composition d'extenseur de chaînes.

**2.** Polyuréthane, en particulier polyuréthane thermoplastique selon la revendication 1, A et B du polysiloxane selon (ii.2) étant choisis indépendamment l'un de l'autre dans le groupe des groupes alkyle en C1-C5, préférablement A et B étant à chaque fois identiques et étant choisis dans le groupe des groupes alkyle en C1-C5, plus préférablement A et B étant tous deux un groupe méthyle.

**3.** Polyuréthane, en particulier polyuréthane thermoplastique selon la revendication 1 ou 2, le polyuréthane présentant une proportion de segments durs dans la plage de 10 à 50 % en poids, préférablement de 17 à 30 % en poids, par rapport au poids total de tous les composants (i), (ii), (iii),
et/ou
le polyuréthane présentant une dureté dans la plage de Shore 30A à 98A ou dans la plage de Shore 40D à 64D, préférablement dans la plage de Shore 30A à 95A, plus préférablement dans la plage de 70A à 95A.

**4.** Polyuréthane, en particulier polyuréthane thermoplastique selon l'une quelconque des revendications 1 à 3, pouvant être obtenu ou obtenu par transformation d'au moins les composants (i) à (iii) :

(i) une composition de diisocyanate, qui comprend au moins du 4,4'-MDI ou du HDI ;
(ii) une composition de polyol, comprenant

(ii.1) au moins un polyétherdiol, préférablement PTHF, ou un polyesterdiol, le polyétherdiol ou polyesterdiol présentant un poids moléculaire moyen en nombre dans la plage de 500 à 3 000 g/mole,
(ii.2) au moins un polysiloxane de formule générale la

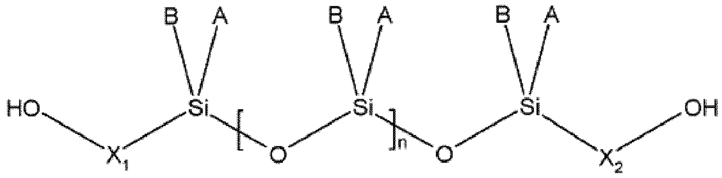

(Ia),

n étant un nombre entier dans la plage de 10 à 20, A et B étant tous deux des groupes méthyle ; $X_1$ étant un groupe $(CH_2\text{-}CH_2\text{-}O)_m$, $X_2$ étant un groupe $(O\text{-}CH_2\text{-}CH_2)_m$, m pour $X_1$, $X_2$ étant à chaque fois indépendamment un nombre entier dans la plage de 3 à 15 ;

(iii) une composition d'extenseur de chaînes qui comprend au moins un diol ou une diamine choisi (e) dans le groupe constitué par le 1,4-butanediol, le 1,6-hexanediol, le 1,2-éthanediol et le 2,4-diamino-3,5-di(méthylthio)toluène.

**5.** Procédé de préparation d'un polyuréthane, en particulier d'un polyuréthane thermoplastique, comprenant la transformation des composants (i) à (iii) :

(i) une composition de polyisocyanate ;
(ii) une composition de polyol, comprenant

(ii.1) au moins un polyesterdiol ou polyétherdiol doté d'un poids moléculaire moyen en nombre dans la plage de 500 à 3 000 g/mole,
(ii.2) au moins un polysiloxane de formule générale I

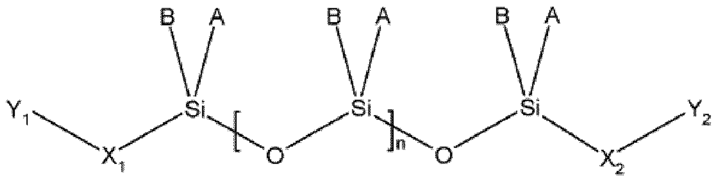

(I),

n étant un nombre entier dans la plage de 1 à 250, A et B indépendamment l'un de l'autre étant choisis dans le groupe des groupes alkyle en C1-C20, $X_1$ du polysiloxane selon (ii.2) étant un groupe $(CH_2\text{-}CH_2\text{-}O)_m$ ou un groupe $(CH_2\text{-}CH_2CH_2\text{-}O)_m$ ou un groupe $(CH_2\text{-}CHCH_3\text{-}O)_m$, $X_2$ du polysiloxane selon (ii.2) étant un groupe $(O\text{-}CHCH_3\text{-}CH_2)_m$ ou un groupe $(O\text{-}CH_2\text{-}CH_2)_m$ ou un groupe $(O\text{-}CH_2\text{-}CH_2\text{-}CH_2)_m$, m pour $X_1$, $X_2$ étant à chaque fois indépendamment un nombre entier dans la plage de 2 à 20 ; et $Y_1$ et $Y_2$ étant tous deux un groupe hydroxyle ;
l'au moins un polysiloxane selon (ii.2) étant contenu en une proportion dans la plage de 5 à 20 % en poids, par rapport au poids total de tous les composants (ii.1) et (ii.2) ;

(iii) une composition d'extenseur de chaînes.

**6.** Utilisation d'un polyuréthane, en particulier d'un polyuréthane thermoplastique, selon l'une quelconque des revendications 1 à 4 ou d'un polyuréthane, en particulier d'un polyuréthane thermoplastique, pouvant être obtenu ou obtenu par un procédé selon la revendication 5 pour la préparation d'un corps moulé, d'un produit moulé par injection, d'un produit d'extrusion, ou d'une feuille, préférablement pour un article choisi dans le groupe constitué par des articles de consommation, préférablement choisis dans le groupe constitué par des articles d'habillement, en particulier une chaussure et un composant de chaussure, en particulier une semelle intermédiaire, une semelle extérieure et des lacets ; des bijoux et un composant de bijou, en particulier pour un dispositif intelligent ou pour l'électronique de surveillance, particulièrement choisi dans le groupe constitué par un bracelet, un composant de bracelet, un tour de cou et un composant de tour de cou, une ceinture corporelle et un composant de ceinture corporelle, des lunettes et un composant de lunettes ; des accessoires de sport, en particulier une bande de sport, une bande d'étirements ; un matériau d'isolation ; des particules de mousse ; un article tissé ; un article non-tissé ; des articles de nettoyage pour des véhicules ou aéronefs mobiles, en particulier des essuie-glaces ; des articles médicaux, en particulier des articles de pansement, un tuyau, un système transdermique, un composant d'un système transdermique, en particulier des pansements, un composant d'un pansement ; une partie de meuble ; des coussins, un composant de coussin ; des matelas, un composant de matelas ; une pièce d'accessoire automobile, en particulier une gaine de câble d'automobile ou un tuyau d'automobile ; une feuille, en particulier une feuille de plancher, une feuille de ski, une feuille de protection ; une enveloppe de protection ; un élément de design pour des composants électriques.

**7.** Article, comprenant un polyuréthane, en particulier un polyuréthane thermoplastique, selon l'une quelconque des revendications 1 à 4 ou un polyuréthane, en particulier un polyuréthane thermoplastique, pouvant être obtenu ou obtenu par un procédé selon la revendication 5.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2817457 A1
- EP 0922552 A1
- WO 2006082183 A1
- WO 2005023920 A1
- WO 2007082838 A1
- WO 2013153190 A1
- WO 2014198779 A1
- WO 2010076224 A1
- US 9097835 B2
- WO 9420568 A1
- WO 2017030835 A1
- WO 2010010010 A1
- WO 2014150122 A1
- WO 2014150124 A1
- EP 1979401 B1
- US 20150337102 A
- EP 2872309 B1
- EP 3053732 A
- WO 2016146537 A1
- EP 17198591


### In der Beschreibung aufgeführte Nicht-Patentliteratur


- Polyurethane. Kunststoffhandbuch. Carl Hanser Verlag, 1993, vol. 7
- **VIEWEG ; HÖCHTLEN.** Kunststoffhandbuch. Carl Hanser Verlag, 1966, vol. 7, 103-113
- *CHEMICAL ABSTRACTS,* 36443-68-2
- *CHEMICAL ABSTRACTS,* 2082-79-3
- *CHEMICAL ABSTRACTS,* 125643-61-0
- *CHEMICAL ABSTRACTS,* 23128-74-7
- *CHEMICAL ABSTRACTS,* 6683-19-8
- *CHEMICAL ABSTRACTS,* 128-37-0
- Polyurethane. Kunststoffhandbuch. Carl Hanser Verlag, 1993, vol. 7, 103-113
- Kunststoff-Taschenbuch. Hanser-Verlag, 1998